# EUROPEAN PATENT SPECIFICATION

(11) **EP 1 759 996 B1**
(45) Date of publication and mention of the grant of the patent: **12.11.2014**
(21) Application number: 05743613.1
(22) Date of filing: 26.05.2005
(51) Int. Cl.: B65B 7/28, B65B 47/04, B65B 61/24, B29C 51/08, B67B 3/02, B67B 3/12, B29C 65/00, B29C 51/32, B29C 65/10, B29C 65/56, B29C 65/78, B29C 67/00, B29L 31/56

(54) **FILLING/PACKAGING MACHINE**
FÜLL-/VERPACKUNGSMASCHINE
MACHINE DE REMPLISSAGE/EMBALLAGE

(30) Priority: 02.06.2004 JP 2004164370
(43) Date of publication of application: 07.03.2007
(73) Proprietor: Shikoku Kakoki Co., Ltd., Itano-gun, Tokushima-ken 771-0202 (JP); Kabushiki Kaisha Yakult Honsha, Tokyo 105-8660 (JP)
(72) Inventor: Miki, Yoshifumi, c/o Shikoku Kakoki Co., Ltd., Itano-gun, Tokushima 7710202 (JP); Yabuuchi, Takanori, c/o Shikoku Kakoki Co., Ltd., Itano-gun, Tokushima 7710202 (JP); Shinohara, Mitsuhiko, c/o Shikoku Kakoki Co., Ltd., Itano-gun, Tokushima 7710202 (JP); Kada, Yoshio, c/o Shikoku Kakoki Co., Ltd., Itano-gun, Tokushima 7710202 (JP); Kanai, Masaharu, c/o Shikoku Kakoki Co., Ltd., Itano-gun, Tokushima 7710202 (JP); Watanabe, Toshiro, c/o Shikoku Kakoki Co., Ltd., Itano-gun, Tokushima 7710202 (JP)
(74) Representative: Nederlandsch Octrooibureau
(86) International application number: PCT/JP2005/009615
(87) International publication number: WO 2005/118398

(56) References cited:
- EP-A1- 1 170 246
- WO-A1-2004/011230
- DE-C- 574 047
- FR-A5- 2 064 545
- JP-A- 54 127 791
- JP-A- 2003 165 566
- JP-A- 2003 226 349
- JP-A- 2003 226 349
- JP-A- 2003 267 422
- JP-A- 2004 154 957
- JP-U- 52 064 661
- US-A- 2 177 990
- US-A- 2 373 708
- US-A- 5 286 247
- US-A- 5 501 039

## Description

### Technical Field

The invention is related to a filling/packaging machine starting out from the machine known from DE-C-574047. Said machine comprises a scaling device for placing a cap in milk bottles, and for sealing the milk bottles with a paper cap is shown. The paper cap has a bottom part (b) and a skirt part (a) having a plurality of folds in which adhesive is applied to, in order to seal the container. Moreover, the sealing device comprises a table wherein the milk bottles are continuously running, and a cap forming device comprising heathers for supplying hot air when the clamp forming device applies pressure to the cap skirt part as to seal the milk bottles. At this stage, the cap is free of adhesive, while the adhesive can be applied in a subsequent stage.

JP-A-2003 226349 discloses a synthetic resin container body and a cap. The cap is made from a laminate film comprising at least a base layer and a heat seal layer. The base layer is formed of a copolymer film. The different materials used for the cap are assessed for pinching, drawing and forming, conveying, and placing of a cap onto the container (clapping), and using a machine for carrying out heat-seal.

EP-Al-1170246 relates to a method of capping of bottles with a metallic crown closure, by reforming of the crown closure to move a part of the skirt portion of the crown to form a curl portion, thereby securing the crown closure onto the neck of the bottle.

### Background Art

conventionally, as filling/packaging machines of this type, a filling/packaging machine which comprises: a container setting-up device for setting up bottle-like synthetic resin containers, which have been fed while facing in a random direction , such that an opening at an upper end thereof faces upward, and for feeding the containers to the next step; a filling device for filling contents in containers fed from the container setting-up device; a cap feeding device for placing caps whose cross sections is substantially U-shaped on the openings at the upper ends of the containers filled with the contents ; and a sealing device for heat-sealing the above-mentioned caps to the openings at the upper ends of the containers, is known ( for example, see Japanese Patent Publication No. 49-37977).

With regard to the above-mentioned bottle-like synthetic resin containers, one may drink the content with his mouth directly putting over the opening of the container after pealing the cap. Therefore, in order to keep the hygienic condition of the opening of the container and its vicinity, a cap constituted such that this part is protected, in other words, a cap consisting of a disk-shaped cap body for covering the opening at the upper end of the container and a skirt part provided such that it is suspended from a peripheral part of the cap body (a cap whose cross section is substantially U-shaped), is used.

As a filling/packaging machine for producing containers filled with contents, which are capped with the above-mentioned caps whose cross section is U-shaped, the following is known: a filling/packaging machine which focuses attention on the excellent formability and shape retaining property of aluminum foil and uses a sheet-like cap material wherein a heat-sealing layer, etc., is laminated onto aluminum foil, and which comprises: a cap punching-out and forming device for punching out a disk-shaped cap from the cap material and for forming it immediately after punching out into a cap whose cross section is U-shaped; a cap feeding device for feeding a formed cap whose cross section is U-shaped to an opening of a container being conveyed and capping the opening with the cap (for example, see Japanese Laid-Open Patent Application No.63-212019). However, as it is impossible to use a metal detector for the containers having cap materials wherein an aluminum foil layer is used as a base material, there is a problem that metals which are possibly mixed into the container, such as nails, staples, broken pieces of punching blade for formed products, bolts and nuts, wires, and springs, cannot be detected. Further, with regard to containers having these aluminum caps, as the aluminum caps and the container bodies made from synthetic resins such as polystyrene need to be collected separately as garbage, it has a defect of low recycling efficiency.

On the other hand, for the purpose of solving these problems, a cap consisting of a laminated film without an aluminum foil layer and made only of a synthetic resin layer has been proposed by the present inventors, as an alternative of a cap material having an aluminum foil layer (for example, see Japanese Laid-Open Patent Application No. 2002-225902). Though the above-mentioned cap consists of a combination of synthetic resin layers only, and the shape of the cap is highly sophisticated, there are problems that : in order to form the cap, it is necessary to heat a cap material before forming it, resulting in increase in cost and size of cap material forming devices; and difficulty in arranging cap forming devices and filling/packaging machines in a continuous process from a standpoint of temperature control of a heating zone for heating cap materials.

In view of the above, the present inventors have conducted further studies for cap materials in order to solve the problems mentioned above, and have succeeded in the development of a synthetic resin cap material that can be formed by cold-draw-forming (for example, see Japanese Laid-Open Patent Application No. 2004-74794), and have proposed containers using the synthetic resin cap material that can be formed by cold-draw-forming, inotherwords, a sealed container comprising a resin container and a cap fixed to the resin container, wherein the cap has a shape retaining property obtained by cold-forming a sheet made of polystyrene-based resin whose propagation energy measured for the sheet which is 150 µm thick, by the falling weight impact test method conforming to ASTM-D3763, is 0.015 J or more (for example, see Japanese Laid-Open Patent Application No. 2004-75197); and a sealed container comprising a resin container and a cap fixed to the resin container, wherein the cap is produced by cold-forming a resin sheet for cold forming having abase material layer containing a polystyrene-based resin containing a composition comprising high impact polystyrene (HIPS) or high impact polystyrene and a butadiene-styrene copolymer, and has a shape retaining property (for example, see Japanese Laid-Open Patent Application No. 2004-75196).

Patent Document 1: Japanese Patent Publication No. 49-37977
Patent Document 2: Japanese Laid-Open Patent Application No. 63-212019
Patent Document 3: Japanese Laid-Open Patent Application No. 2002-225902
Patent Document 4: Japanese Laid-Open Patent Application No. 2004-74794
Patent Document 5: Japanese Laid-Open Patent Application No. 2004-75197
Patent Document 6: Japanese Laid-Open Patent Application No. 2004-75196

### Disclosure of the Invention

### Object to Be Attained by the Invention

The object of the present invention is to provide a filling/packaging machine which solves all of the conventional problems mentioned above, and makes it possible to obtain a sealed container sealed by placing a cap formed from a synthetic resin sheet-like cap material on a synthetic resin container filled With a content such as soft drinks.

### Means to Attain the Object

The above-mentioned object is achieved by the features of claim 1.

The dependent claims 2 to 12 relate to advantageous embodiments.

### Brief Description of Drawings

[Fig. 1] This is an overall plan view of one embodiment of the filling/packaging machine of the present invention.
[Fig. 2] This is a longitudinal cross section of the filling device in the filling/packaging machine shown in Fig. 1.
[Fig. 3] This is a schematic view of the primary cap cold forming device in the filling/packaging machine shown in Fig. 1.
[Fig. 4] This is a plan view of the sheet-like cap material in the process of punching out caps in the primary cap cold forming device shown in Fig. 3.
[Fig. 5] This is a longitudinal cross section of the cap punching-out and forming device in the primary cap cold forming device shown in Fig. 3.
[Fig. 6] This is a perspective view of the forming die in the cap punching-out and forming device shown in Fig. 5.
[Fig. 7] This is a perspective view of the cap formed by the primary cap cold forming device shown in Fig. 3.
[Fig. 8] This is a longitudinal cross section of the sealing device in the filling/packaging machine shown in Fig. 1.
[Fig. 9] This is a plan view of the secondary cap forming device in the filling/packaging machine shown in Fig. 1.
[Fig. 10] This is a longitudinal cross section of the secondary cap forming device body in the secondary cap forming device shown in Fig. 9.
[Fig. 11] This is a longitudinal cross section of the container on the transfer conveyor in the secondary cap forming device shown in Fig. 9.
[Fig. 12] This is a longitudinal cross section of the forming and processing part in the secondary cap forming device body shown in Fig. 10.
[Fig. 13] This is an enlarged longitudinal cross section of one end of the formed hole and its vicinity in the forming and processing part shown in Fig. 12.
[Fig. 14] This is a longitudinal cross section showing the shape of a cap in the process of forming.

### Explanation of Letters or Numerals

- A: container feeding device
- A-1: container setting-up device
- A-2: transfer conveyor
- A-3: screw conveyor
- A-4: inlet star wheel
- B: filling device
- B-1: filling liquid tank
- B-2: filling nozzle
- B-3: container placing table
- B-31: fixed part
- B-32: move part
- B-33: spring
- B-34: roller shaft
- B-35: roller
- B-4: turntable
- B-5: drive shaft of filling device
- B-6: cam
- B-7: container holder
- B-8: intermediate star wheel
- C: primary cap cold forming device
- C-1: roll of cap material
- C-2: automatic cap material feeding device
- C-3: half-cutting device
- C-31: laser
- C-4: cap punching-out and forming device
- C-41: movable blade (male blade)
- C-42: fixed blade (female blade)
- C-43: holding member
- C-44: forming die
- C-441: groove
- C-45: cap pushing-back piston
- C-451: spring
- C-46: piston rod
- C-47: operating rod for reciprocating former
- C-48: former
- C-5: recovery roll
- D: cap feeding device (chute)
- E: sealing device
- E-1: ultrasonic sealing device
- E-11: sealing device body
- E-12: horn
- E-2: upper turntable
- E-3: container table
- E-4: lower turntable
- E-5: drive shaft of sealing device
- E-6: controlling device
- F: secondary cap forming device
- F-1: secondary cap forming device body
- F-11: drive shaft
- F-12: upper turntable
- F-131: container table
- F-132: container holder
- F-14: forming and processing part
- F-141: tubular female die
- F-142: extrusion piston
- F-143: spring holder
- F-144: spring
- F-145: piston rod
- F-146: stopper
- F-147: gear
- F-148: setting-in recess
- F-15: forming auxiliary part
- F-151: driving pulley
- F-152: driven pulley
- F-153: synchronous belt
- F-2: pipe-like hot air nozzle
- F-3: screw conveyor
- F-4: transfer conveyor
- F-41: transfer belt
- F-5: inlet star wheel
- F-6: guide
- F-7: outlet star wheel
- S: synthetic resin sheet-like cap material, packaging material
- S-1: substantially U-shaped groove
- P: container
- P-1: container body
- P-2: cap
- P-21: disk-shaped cap body, upper surface of cap
- P-22: skirt part
- P-23: folded part

### Best Mode of Carrying Out the Invention

The filling/packaging machine of the present invention can be any filling/packaging machine as long as it is a filling/packaging machine for filling a content in a container body, for placing a cap on the container body filled with the content, and for sealing the container body with the cap to make a sealed container, which comprises: a container feeding device for feeding a synthetic resin bottomed tubular container body to a filling device; a filling device for filling a content in a container body fed; a primary cap cold forming device for forming a synthetic resin formed cap which has a disk-shaped cap body and a skirt part provided such that it is suspended from a peripheral part of the cap body, from a sheet-like cap material; a cap feeding device for feeding a formed cap to an opening at an upper end of a container body filled with a content; a sealing device for sealing an opening at an upper end of a container body with a formed cap to make a sealed container; and a secondary cap forming device for forming a cap of a sealed container formed by the primary cap cold forming device into a final cap shape. For example, it may be a filling/packaging machine constituted such that: a plurality of containers are held in a direction perpendicular to a transfer direction; the containers are transferred rectilinearly to the downstream side of the transfer direction intermittently or continuously; a filling device, a primary cap cold forming device, a cap feeding device, a sealing device, and a secondary cap forming device are sequentially provided along the container transferring route; and each treatment is simultaneously conducted to a plurality of containers held in a direction perpendicular to the transfer direction while they are transferred. However, when making a filling/packaging machine of continuously rotating type wherein containers are made to pass through each treatment device such as a filling device and a sealing device of rotating type while they are continuously transferred in a line, and thereby sealed containers filled with a content are completed, a filling/packaging machine which is compact and with high ability can be obtained.

With regard to the container feeding device mentioned above, there is no particular limitation as long as it is a device capable of feeding synthetic resin bottomed tubular container bodies to a filling device, and for example, conventionally known ones having a container setting-up device, a transfer conveyor, a screw conveyor, etc., can be used. When using the container feeding device thus described, it is possible, with the use of the container setting-up device, to set up bottle-like synthetic resin containers, which have been fed while facing in a random direction, such that an opening at an upper end thereof faces upward, and to place the containers on the transfer conveyor in a line, and the containers placed on the transfer conveyor are transferred to the downstream side and aligned by the screw conveyor in a prescribed pitch at the downstream part of the transfer conveyor, and the aligned containers are fed to the filling device through an inlet star wheel.

With regard to the filling device mentioned above, there is no particular limitation as long as it is a device capable of filling contents in container bodies fed by the container feeding device. For example, it is possible to use conventionally known ones having: a filling liquid tank; a prescribed number of filling nozzles provided downward and at even intervals on the undersurface of a peripheral part of the filling liquid tank; a container placing table provided below the filling nozzles, at a position corresponding to the filling nozzles; and a turntable equipped with the container placing table. With the use of the filling device thus described, the container placing table or the filling nozzles move up and down and contents can be filled while the containers on the container placing table turn around.

With regard to the primary cap cold forming device mentioned above, there is no particular limitation as long as it is a device capable of forming synthetic resin formed caps having a disk-shaped cap body and a skirt part provided such that it is suspended from a peripheral part of the cap body, from a sheet-like cap material. Those comprising a roll of cap material, an automatic cap material feeding device, a half-cutting device, a cap punching-out and forming device, a recovery roll, etc., can be preferably exemplified. When using the primary cap cold forming device thus described, at first, a synthetic resin sheet-like cap material, which is rolled, is guided to a half-cutting device via an automatic cap material feeding device. With regard to the half-cutting device for securing an openability at the time of sticking a straw into a cap of a container, there is no particular limitation as long as it can form a substantially U-shaped groove on the sheet-like cap material, and a laser and a known cutter wherein a blade for forming grooves is provided on the outer circumferential surface of a metal roller can be exemplified. The sheet-like cap material wherein grooves are formed by the half-cutting device is then guided to the cap punching-out and forming device.

As the cap punching-out and forming device mentioned above, conventionally known ones can be used, however, followings are preferable in view of the improvement of so-called shape retaining property which is a property to maintain a folded and deformed shape, because a fold guiding part such as a groove is provided, and stress is focused on a folded part to cause plastic deformation: those comprising a cap material punching-out means for punching out one or more cap materials from a sheet-like cap material, and a cap forming means having a forming die and a former for forming a cap material punched out by the cap material punching-out means, wherein a plurality of grooves or projections is provided on an inner circumferential surface of the forming die, and/or a plurality of grooves or projections is provided on an outer circumferential surface of the former; among them, those provided with a plurality of grooves on the inner circumferential surface of the forming die. In particular, those wherein grooves or projections provided on the inner circumferential surface of the forming die, and/or grooves or projections provided on the outer circumferential surface of the former are provided parallel to the setting-in direction of the former are preferable from the viewpoint of slidability of the former. Further, those wherein the cross-sectional shape of the grooves and projections provided on the inner circumferential surface of the forming die is a circular arc are preferable in view that the formation of folds is smoothly guided and the shape retaining property of the cap is improved. Furthermore, those wherein a surface treatment is conducted to the inner circumferential surface of the forming die, and those wherein a surface treatment is conducted not only to the inner circumferential surface of the forming die, but also to the mouth of the forming die are preferable in view that the slidability of the skirt part of the cap material is improved and stress is easily focused on the folded part to cause plastic deformation, and shape retaining property is improved, and moreover, in view that it becomes possible to reduce breakage of caps which occurs during a punching-out and forming process, and the demolding (mold-releasing property) of the formed cap from the forming die is improved. Examples of the surface treatment mentioned above include hard chrome plating, nickel-boron plating, and Kanigen plating. Nickel-boron plating is preferable from the viewpoint that a surface treatment which reduces dynamic friction coefficient further improves the slidability of the skirt part of the cap material.

It is preferable that the gap (minimal gap) between the forming die and the former in the above-mentioned cap forming means is adjusted not to exceed 4.0 times, and particularly preferable that it is adjusted between 1.3 and 3.5 times the thickness of the sheet-like cap material. When the gap between the forming die and the former does not exceed 4.0 times, the packaging material sheet is plastically deformed, and resin caps having a shape retaining property can be produced more easily, and when the gap between the forming die and the former is 1.3 times or more, particularly 1.5 times or more the thickness of the packaging material, there will be less possibility that the breakage of the packaging material sheet occurs during a punching-out and forming process.

In addition, the cap material punching-out means mentioned above is not particularly limited as long as it is capable of punching out one or more cap materials from a sheet-like cap material, and a punching-out means comprising a movable blade provided on the position opposite to the forming die and a fixed blade provided adjacently to the outer circumferential part of the forming die such that its surface is elevated can be preferably exemplified. Further, when a holding member for sheet-like cap material is attached to a flange part via a spring such that it surrounds the outer circumferential part of the movable blade, it is possible to prevent the sheet-like cap material from moving at the time of punching out, and a punching-out process can be carried out stably.

In addition, the aforementioned cap forming means can be advantageously used as a part of a primary cap cold forming device. With regard to the cap feeding device mentioned above, there is no particular limitation as long as it is a device capable of feeding formed caps which have been formed by the primary cap cold forming device to openings at upper ends of container bodies filled with a content. The caps, which have been formed by the cap forming means such that the cross section is substantially U-shaped, are dropped on the cap feeding device (chute) located below, and placed one by one on the openings at the upper ends of the containers being transferred by an intermediate star wheel, etc. The sheet-like cap material wherein caps have been punched out is recovered by a recovery roll.

As mentioned above, by using the cap punching-out and forming device, it is possible, for example, to form apunched-out cap material into a cap-like shape by the process comprising the steps of : punching out one or more cap materials from a resin sheet for cold forming; advancing and setting in the former in the forming die immediately after the cap material is punched out , while bringing the packaging material abutting a mouth of the forming die; and forming a skirt part of a cap in a gap between the former and the forming die. In particular, with the use of a plurality of grooves or projections provided on the inner circumferential surface of the forming die, and/or a plurality of grooves or projections provided on the outer circumferential surface of the former, preferably, with the use of a plurality of grooves provided on the inner circumferential surface of the forming die, forming into a cap-like shape can be carried out while guiding a fold to the skirt part of the cap. Hereinafter, the resin sheet for cold forming, which is exemplified as a preferable example of a sheet-like cap material, is described in detail.

The resin sheet for cold forming is not particularly limited as long as it is a resin sheet that is used to manufacture a synthetic resin cap being fixed to a resin formed product (container body, etc.), and is made of a base material layer (single layer body) or a base material layer on which a functional layer is laminated (laminated body), and as long as it is a resin sheet for cold forming capable of giving a shape retaining property to the resin cap. It can be a single-layer structure made only of a base material layer, or a laminated structure wherein a functional layer is laminated on both surfaces or either one of the surfaces of the base material layer. Examples of the above-mentioned functional layer include; a sealant layer having an adhesive function, an antistatic layer having an antistatic function, a barrier layer having a gas penetration blocking function, a printing layer having a display function, and a protection layer having a protection function for the printing layer.

The base material layer of the resin sheet for cold forming is a layer having cold formability which makes it possible to form a secondary formed product having a shape retaining property by the plastic deformation caused by cold forming of the sheet. As for a material of the base material layer, there is no specific limitation and the one containing, for example, PS (polystyrene)-based resin such as PS resin, AS (styrene-acrylonitrile copolymer) resin, ABS (acrylonitrile-butadiene-styrene copolymer)-based resin, and AXS (terpolymer having acrylonitrile and styrene components) resin; PET-based resin such as unsaturated polyester resin and saturated polyester resin; polyethylene-based resin such as high-density polyethylene, low-density polyethylene, EVA (ethylene-vinyl acetate copolymer) resin, EVOH (ethylene-vinyl alcohol copolymer) resin; polypropylene-based resin; other polyolefin-based resin; polyacetal-based resin; and polycarbonate resin, etc., can be exemplified, or it can be a base material layer containing one or more kinds of these resins. Among them, the one containing PS-based resin, ABS-based resin or PET-based resin is preferable. It is especially preferable that it contains the same kind of resin as the resin formed product as a main component because it is possible to improve recycling efficiency. When the resin formed product contains a polystyrene-based resin, in particular, a high impact polystyrene-based resin as a main component, it is more preferable to contain the same kind of polystyrene-based resin or high impact polystyrene-based resin as a main component. Further, additives such as plasticizers, stabilizers, flame retardants, antioxidants, ultraviolet absorbers, colorants and antistatic agents, and subsidiary material additives such as reinforcing agents and filling agents can be added to these resins appropriately.

As for the above-mentioned polystyrene-based resin contained in the base material layer of the resin sheet for cold forming, so-called general-purpose polystyrene-based resin, rubber-modified polystyrene-based resin and the mixture thereof can be exemplified. The rubber-modified polystyrene-based resin is preferable among them, and the high impact polystyrene-based resin is preferable among the rubber-modified polystyrene-based resins, and especially the one wherein a styrene-butadiene copolymer is mixed and kneaded with the high impact polystyrene-based resin at a prescribed proportion, is more preferable.

The above-mentioned general-purpose polystyrene-based resin is also referred to as "GPPS", and is generally a styrene homopolymer, however, the resin used for a base material layer is not limited to a styrene homopolymer. As for a styrene-based monomer of the general-purpose polystyrene-based resin, styrene having one or more substituents such as alkyl groups and phenyl groups can be exemplified besides styrene. Specific examples of the styrene monomer include alkyl-substituted styrene such as α-methylstyrene, α-ethylstyrene, α-n-propylstyrene, α-isopropylstyrene, α-n-butylstyrene, α-t-butylstyrene, o-methylstyrene, m-methylstyrene, p-methylstyrene, o-ethylstyrene, m-ethylstyrene, p-ethylstyrene, o-isopropylstyrene, m-isopropylstyrene, p-isopropylstyrene, o-t-butylstyrene, m-t-butylstyrene, and p-t-butylstyrene. As for a polystyrene-based resin, it can be a homopolymer of these monomers or a copolymer of two or more kinds of them. With regard to the copolymer, it can be any copolymer such as a random copolymer , an alternating copolymer, a block copolymer, a graft copolymer, etc.

In addition, as for the above-mentioned rubber-modified polystyrene-based resin, anything can be used as long as it is a so-called high impact polystyrene (HIPS) wherein synthetic rubber is blended with polystyrene. With regard to the blending method, it can be any blending method such as a method wherein rubber and polystyrene, both of which are polymers, are blended together mechanically or mixed together in the latex state, or a method wherein rubber is dissolved in a styrene monomer for polymerization, and a method wherein a styrene-based monomer is polymerized in the presence of a rubber-like polymer is preferable. The high impact polystyrene thus obtained from the method wherein a styrene-based monomer is polymerized in the presence of a rubber-like polymer is a graft copolymer wherein side chains of polystyrene are attached to rubber. The high impact polystyrene has a structure wherein soft component particles are present in a dispersed condition in polystyrene forming a matrix. As for a soft component particle, a particle having a structure generally referred to as "salami structure" or "single occlusion structure" , which is a structure wherein polystyrene is occluded to the rubber-like polymer, is preferable, but it is not limited thereto. Further, as for a styrene-based monomer, the same styrene-based monomers as those of the GPPS mentioned above can be exemplified. Examples of the rubber-like polymer include polybutadiene, a styrene-butadiene copolymer and polyisoprene, and among them, a styrene-butadiene copolymer is especially preferable. As for the styrene-butadiene copolymer, SBR-based thermoplastic rubber can be exemplified, and the styrene-butadiene block copolymer having an SB or SBS structure, or SEBS wherein these are fully or partly hydrogenated, etc., can be used as well.

With regard to a rubber-modified polystyrene-based resin contained in the base material layer, the ones containing a composition consisting of only high impact polystyrene, or consisting of high impact polystyrene and a styrene-butadiene copolymer are preferable. Among them, the ones containing a composition consisting of 100 to 70% by weight of high impact polystyrene and 0 to 30% by weight of a styrene-butadiene copolymer are preferable, and in particular, the ones containing a composition consisting of 100 to 70% by weight of high impact polystyrene (hereinafter referred to as "high impact polystyrene (A)") that is obtained by polymerizing a styrene-based monomer in the presence of a rubber-like polymer, and has a matrix whose weight-average molecular weight is 150000 to 300000, a styrene content of 82 to 94% by weight, a rubber content of 6 to 15% by weight, and a liquid paraffin content of 0 to 3.0% by weight; and 0 to 30% by weight of a styrene-butadiene copolymer (hereinafter referred to as "styrene-butadiene copolymer (B)" ) that has a styrene content of 30 to 90% by weight, and a butadiene content of 70 to 10% by weight is preferable, because it makes possible to plastically deform the sheet by cold-forming the sheet, and the secondary formed product (synthetic resin formed cap) obtained by cold-forming the sheet will have an excellent impact resistance, and an excellent shape retaining property as well.

When the rubber content of above-mentioned high impact polystyrene (A) is 6% by weight or more, preferably 9% by weight or more, the sheet is not ruptured at the time of cold forming. When the rubber content is 15% by weight or less, it becomes easier to plastically deforming the sheet by cold forming, resulting that the obtained secondary formed product has a sufficient shape retaining property. Therefore, such rubber content is preferable. Further, the rubber content of high impact polystyrene can be calculated by a calculating method based on the amount of rubber used at the time of manufacture, or a method for evaluating an analytical curve prepared by infrared absorption spectrometry (IR) method with the use of high impact polystyrene containing a known rubber content as a standard sample.

Furthermore, when a liquid paraffin content of the above-mentioned high impact polystyrene (A) is 3.0% by weight or less, preferably 2.0% by weight or less, it becomes easier to plastically deforming the sheet by cold forming, resulting that the obtained synthetic resin formed cap has a sufficient shape retaining property. Therefore, such liquid paraffin content is preferable. As for the liquid paraffin, cycloparaffin such as cyclopentane, cyclohexane, cycloheptane, etc., can be specifically exemplified, and white mineral oil which can be used for food packaging materials (mineral oil being a mixture of alkyl naphthene hydrocarbon and having a weight-average molecular weight of about 300 to 600) can be preferably exemplified.

Among the above-mentioned high impact polystyrenes (A), the one having a matrix whose weight-average molecular weight is in the range of 150000 to 300000, especially 200000 to 250000 is preferable. When the matrix whose weight-average molecular weight is 150000 or more, the synthetic resin formed cap obtained by cold forming becomes a resin cap having more appropriate strength. When the matrix whose weight-average molecular weight is 300000 or less, it becomes easier to plastically deforming the sheet by cold forming, resulting that the obtained synthetic resin formed cap has a sufficient shape retaining property. Therefore, such weight-average molecular weight is preferable. A molecular weight of the matrix of the high impact polystyrene (A) mentioned above can be measured by the following method. In brief, it is a method comprising the steps of: dissolving 1 g of high impact polystyrene in 30 ml of methyl ethyl ketone/methanol mixed solvent (volume ratio: 20/3); then, separating a matrix part and soft component particles which are insoluble components by centrifugation; collecting the supernatant other than the insoluble components by decantation; pouring the collected supernatant gradually into about 500 ml of methanol while stirring to precipitate a polymeric part; separating the polymeric part by filtration, then removing methanol by drying; dissolving the obtained dry sample in tetrahydrofuran such that the concentration is adjusted to be 2 mg/ml, and the molecular weight of the matrix in the dissolution is measured with gel permeation chromatography (GPC) . The GPC used is equipped with a differential refractometer (RI detector) as a detector, and the molecular weight can be calculated based on the analytical curve obtained by using commercially available monodisperse polystyrene.

Further, among the above-mentioned high impact polystyrenes (A), the ones wherein the swelling degree of soft component particles contained therein is 30 or less are preferable. When the swelling degree of the soft component particles is 30 or less, it becomes easier to plastically deforming the sheet by cold forming, resulting that the obtained synthetic resin formed cap has a sufficient shape retaining property. The above-mentioned swelling degree can be measured by the following method. In brief, it is the method comprising the steps of: dissolving 0.4 g of high impact polystyrene in 18 ml of toluene and leaving the resultant for 2 hours or more. The obtained toluene solution is centrifuged (4500 rpm × 2 hours) to separate an insoluble matter. The supernatant is discarded, the insoluble matter is weighed, and the weight is represented as "a". Next, the insoluble matter is dried in a vacuum dryer, and the weight after drying is represented as "b". The swelling degree can be calculated from "a/b".

Furthermore, among the above-mentioned high impact polystyrenes (A), the ones wherein the average particle diameter of soft component particles contained therein is 0.5 to 10 µm, especially 1 to 5 µm, are preferable. When the average particle diameter of soft component particles contained therein is 0.5 µm or more, preferably 1 µm or more, the sheet is not ruptured at the time of cold forming of the sheet. When it is 10 µm or less, preferably 5 µm or less, it becomes easier to plastically deforming the sheet by cold forming, resulting that the obtained synthetic resin formed cap has a sufficient shape retaining property. The average particle diameter of the soft component particles mentioned above can be measured by the following method. In brief, it is a method comprising the steps of: dissolving high impact polystyrene in methyl ethyl ketone such that the concentration is adjusted to about 1%; with a laser diffraction particle size analyzer (SALD-1100; Shimadzu Corporation), exposing this sample solution to the laser beam to detect an image of generated diffraction ray and scattered ray; then the size and the amount of particles are calculated based on the pattern and the intensity of the image. For the average particle diameter, it is possible to use 50% of particle diameter in cumulative volume distribution.

On the other hand, among the above-mentioned styrene-butadiene copolymers (B), the ones whose styrene content is 30 to 90% by weight, and whose butadiene content is 10 to 70% by weight are preferable from the viewpoint that it is possible to add more excellent shape retaining property and impact resistance.

If necessary, various additives, for example, additives such as antioxidants, plasticizers, heat stabilizers, ultraviolet absorbers, light stabilizers, lubricants, mold-releasing agents, flame retardants, flame retardant aids, pigments, dyes, carbon black, and antistatic agents can be blended with the base material layer in the resin sheet used, or organic fine particles or inorganic fine particles can be added to the extent that they do not impair the performance of the base material layer. In addition, the thickness of the base material layer in the resin sheet is not particularly limited, and, for example, in case of polystyrene-based resin sheet used for manufacturing a synthetic resin formed cap which needs to be peeled from the resin formed product such as a container with an opening, it is preferable that the thickness is in the range of 50 µm to 1 mm.

The functional layer laminated on either one of the surfaces or both surfaces of the base material layer in the resin sheet used is provided to give various functions which improve adhesiveness, antistatic property, wear resistance, aesthetic property, weather resistance, gas barrier property, etc. Examples of such functional layer include a sealant layer, an antistatic layer, a printing layer, and a barrier layer. The functional layer can be constituted of multiple layers having respective functions, or of one layer having plural functions. As for a resin sheet comprising these functional layers, the followings can be exemplified: the one wherein the sealant layer is laminated on both surfaces or either one of the surfaces of the base material layer; the one wherein the sealant layer and the antistatic layer are laminated on both of the surfaces of the base material layer, respectively; the one wherein the sealant layer is laminated on one surface of the base material layer, and the printing layer and the antistatic layer are sequentially laminated on the other surface of the base material layer; and in addition, the one wherein the barrier layer is laminated between the sealant layer and the base material layer. Moreover, if necessary, additives such as antioxidants, heat stabilizers, ultraviolet absorbers, light stabilizers, flame retardants, mineral oils, external lubricants can be blended with these functional layers appropriately, or organic fine particles or inorganic fine particles can be added to the extent that they do not impair the property.

Examples of a method for manufacturing the functional layers such as the sealant layer and the antistatic layer mentioned above include: a method wherein a coating solution containing components appropriate for the respective functions, for example, adhesive components, antistatic agents, etc., is coated on either one of the surfaces or both surfaces of the base material layer, and then dried; and a method wherein a film is manufactured by kneading these components into a raw material of resin, and then laminated. As for a method for coating, methods such as roll coater, knife coater, gravure and knife coater and spraying can be adopted. The surface of the base material layer may be reformed in advance by methods such as a corona discharge treatment method, an ozone treatment method, and a plasma treatment method. Further, as for a functional film for laminating, the ones containing the same kind of resin as the base material layer are preferable. For example, when the base material layer contains the above-mentioned polystyrene-based resin, the one containing GPPS and/or a styrene-butadiene copolymer is preferable.

The sealant layer as the functional layer mentioned above is laminated on both surfaces or either one of the surfaces of the base material layer directly or indirectly in order to adjust the adhesive strength between the synthetic resin formed cap formed from a resin sheet and the resin formed product (container body, etc.). When it is necessary to adjust the adhesive strength, for example, when it is necessary to peel the synthetic resin formed cap from the resin formed product by fingers, it is preferable to provide a sealant layer. However, when it is not necessary to adjust the adhesive strength, for example, when it is a resin cap for which high adhesive strength is preferable because the resin formed product and the synthetic resin formed cap are manufactured from the same kind of resin, there is no particular need to provide the sealant layer. The components, the thickness, etc., of the sealant layer can be selected appropriately according to the components of the synthetic resin formed cap and the resin formed product that are fixed via the sealant layer, and a fixing method thereof (for example, physical heat sealing and chemical adhesion). Examples of an adhesive component in chemical adhesion include: starch; glue; dextrin; vinyl-based polymers such as vinyl acetate resins, vinyl chloride resins and acrylic resins; rubber such as natural rubber, chloroprene rubber and butyl rubber; amino resins; epoxy resins; phenol resins; unsaturated polyester; polyurethane; and polyimide. However, physical heat sealing with the sealant film for laminating, which does not need the adjustment of the fixing part, is more preferable than the chemical adhesion with the sealant layer formed by coating the adhesive components. In addition, it is preferable that the thickness of the sealant layer is generally in the range of 10 to 50 µm.

As for a sealant layer used in the case where the sealant film for laminating is used for adhesion, for example, in the case where the resin formed product and the synthetic resin formed cap containing a polystyrene-based resin as a main component are ultrasonically welded, a sealant film wherein the same kind of resin as the base material layer is contained as amain component can be preferably exemplified. By blending other thermoplastic resins with the same kind of polystyrene-based resin as the resin formed product or the base material layer, the peel strength can be controlled according to its blended amount. Further, a sealant film mainly constituted of a material which is excellent in adhesiveness, such as a thermoplastic elastomer and an ethylene-based copolymer, can be preferably exemplified. Examples of the above-mentioned ethylene-based copolymer include ethylene-vinyl acetate copolymers and ethylene-unsaturated carboxylic acid ester copolymers. If necessary, various additive components, for example, additives such as antioxidants, heat stabilizers, ultraviolet absorbers, light stabilizers, lubricants, flame retardants, flame retardant aids, antistatic agents, pigments, carbon black, mineral oils, and external lubricants can be blended with the sealant layer. In addition, organic fine particles or inorganic fine particles can be added as well to the extent that they do not impair the sealing function.

The adhesive strength between the sealant layer and the base material layer is preferably 3 N/15 mm in width or more, particularly preferably 5 to 8 N/15 mm in width. In the case where the adhesive strength between the sealant layer and the base material layer is 3 N/15 mm in width or more, when the synthetic resin formed cap fixed to the resin formed product is peeled off by fingers, the occurrence of delamination between the sealant layer and the base material layer can be reduce, and it is possible to prevent a splinter of the sealant layer, which is peeled in the resin formed product and the cap and caused by delamination between the base material layer and the sealant layer, from adhering to the resin formed product and remaining there. When the adhesive strength is 5 to 8 N/15 mm in width or more, more remarkable effect can be obtained. The adhesive strength can be measured by the following method which conforms to JIS-K6854. In brief, it is a method comprising the steps of: pinching unadhered parts of the base material layer and the sealant layer with chucks respectively with the use of a tensile strength tester; setting the opening of both layers at 180°; pulling the unadhered parts at a pulling speed of 300 mm/min; measuring the load at that time; and the adhesive strength can be calculated by converting the measured load into the load per 15 mm in width of adhesion. Further, when a better peeling property between the resin formed product and the resin cap is required, it is preferable to make the flexibility of the functional layer larger than that of the base material layer, and to make the hardness of the functional layer smaller than that of the base material layer in order to obtain a comfortable peeling property.

The antistatic layer as the functional layer mentioned above is provided in order to make it possible to continuously forming the synthetic resin formed cap from the resin sheet by reducing frictional electrification. The antistatic layer is laminated usually on the surface opposite to the laminated surface of the sealant layer, directly or indirectly on the base material layer. The sheet comprising the functional layer can prevent situations wherein the synthetic resin formed cap cannot be transferred because of difficulties in taking out/feeding of the synthetic resin formed cap caused as follows: when continuous cold forming is carried out, there occurs friction between the sheet and the die in the die part and the synthetic resin formed cap is significantly electrostatically charged; as a result, the obtained resin cap adheres to the die without being demolded, and thereby the sheet to be fed next, etc., and the resin cap are overlapped, or the resin cap adheres by electrostatic charging to a peripheral part of the die or a chute part, or the resin cap immediately after forming drifts in the air, etc.. Such electrostatic charge of the synthetic resin formed cap can be avoided by improving the electroconductivity of the sheet surface and/or improving the sliding property of the sheet surface. As for the improvement of the electroconductivity, it is preferable to adjust the surface resistivity value of the sheet surface measured in conformity to JIS-K6911 to be in the range of 10⁶ to 10¹⁴ Ω. In addition, as for the improvement of the sliding property, it is preferable to adjust the coefficient of static friction of the sheet surface measured in conformity to JIS-K7125 to be in the range of 0.1 to 0.4.

A resin sheet wherein the surface resistivity value of the sheet surface is in the range of 10⁶ to 10¹⁴ Ω can be manufactured, for example, by coating the sheet surface with surfactants such as antistatic agents and anti-fogging agents, or with electroconductive substances such as hydrophilic macromolecules, as an antistatic layer, or the sheet can be manufactured by kneading antistatic agents or anti-fogging agents into the resin before the resin is formed into a sheet. For example, in case of a polystyrene-based resin sheet, when the antistatic layer is formed by coating the surface of the base material layer of the polystyrene-based resin with the electroconductive substance, etc., coating amount is preferably in the range of 20 to 500 mg/m². When the surface resistivity value of a polystyrene-based resin sheet is larger than 10¹⁴ Ω, there occurs significant frictional electrification at the time of continuous forming as mentioned above, and it may become difficult to take out/feed the resin cap because it adheres to the die part. In addition, a resin sheet wherein the coefficient of static friction of the sheet surface is in the range of 0.1 to 0.4 can be manufactured, for example, by coating the sheet surface with surface lubricants such as a polysiloxane resin, as the functional layer, or the sheet can be manufactured by kneading surface lubricants, etc., into the resin before the resin is formed into a sheet. When manufacturing the functional layer, the polysiloxane resin can be used in either form of oil or water-based emulsion. When coating, the coating amount is preferably in the range of 0.1 to 50 mg/m². As mentioned above, by kneading the antistatic agents or surface lubricants, etc., directly into the material resin of the base material layer, it becomes possible for the base material layer to substitute for the antistatic layer with an antistatic effect having a prescribed surface resistivity value and a coefficient of static friction.

The printing layer as the above-mentioned functional layer is provided for the purpose of a product description and surface decoration of the synthetic resin formed cap. It can be provided either on the surface of the base material layer, or between the base material layer and such other functional layer laminated on the base material layer. However, when there is other functional layer on both surfaces or either one of the surfaces of the base material layer, it is preferable that the printing layer is provided between the base material layer and such other functional layer in order to avoid omission and damage of the printing surface caused by the friction between the sheet and the die, etc., at the time of cold forming. Examples of a method for forming a printing layer include: a method for forming a printing layer by printing on the surface of the base material layer; a method for forming a printing layer by laminating other functional layer on the printing surface prepared on the surface of the base material layer; a method for forming a printing layer by printing on the backside of the other functional layer manufactured as a film so that it can be used also as the printing layer, and by laminating this film, which acts as the printing layer as well, in such a manner that the printing surface comes into contact with the base material layer; a method for forming a printing layer by using the film on which printing is performed separately as a printing layer, and by laminating this film between the base material layer and other functional layer. Further, the printing layer can be decorated with metallic luster.

The barrier layer as the above-mentioned functional layer is provided in order to add weather resistance, gas barrier property, etc., against light, gas , etc . , to the sheet. In the case where the products formed from the sheet are containers, caps of containers, packaging materials, etc., the barrier layer is provided in order to add an aroma retaining function and a function to prevent permeation of water vapor and poisonous gas, so that spoilage of the content can be prevented. The barrier layer is generally manufactured as a gas impermeable film, and when other functional layers are provided on the surface of the base material layer, or provided on both surfaces or either one of the surfaces of the base material layer, it is provided between the other functional layer and the base material layer, for example, between the sealant layer and the base material layer. As for the above-mentioned gas impermeable film, a resin film manufactured from a resin containing a resin component which constitutes the base material layer is preferable. The film may, if necessary, contain an ultraviolet absorbed, etc. The thickness of the gas impermeable film that forms the barrier layer is generally in the range of 10 to 100 µm.

As mentioned above, a cold forming process accompanied with the plastic deformation such as forming, bending, shearing and pressing is carried out to the resin sheet for cold forming by pushing the sheet material into the female die by using the male die without heating, generally at room temperature, and pressing the sheet material at high speed. As for a technique to evaluate the plastic deformation of the sheet at this point of time as a model, the high speed impact test at room temperature is considered to be effective . From this point of view, it is preferable that the propagation energy and the displacement at maximum load of the resin sheet for cold forming, which are measured by the falling weight impact test method conforming to ASTM-D3763, have specific values.

For example, in the case where the resin sheet for cold forming contains a polystyrene-based resin, it is preferable that the propagation energy of the sheet which is 150 µm thick, measured by the falling weight impact test method conforming to ASTM-D3763, is 0.015 J or more, particularly 0.02 J or more. When the propagation energy is 0.015 J or more, the sheet material is plastically deformed sufficiently without rupture, and the obtained synthetic resin formed caps are uniformly shaped with a shape retaining property. When the energy is 0.02 J or more, more remarkable effect can be obtained. The propagation energy of the falling weight impact test described herein refers to the absorbed energy between the displacement at maximum load and the displacement at the rupture in the total absorbed energy needed for the break obtained at the falling weight impact test. In addition, a value obtained by the falling weight impact refers to a value measured with the use of a weight having a holder of 45 mm in diameter and an impact core of 13 mm in diameter, at the rate of fall of the impact core of 5.0 M/sec.

Similarly, in the case where the resin sheet for cold forming contains a polystyrene-based resin, it is preferable that the displacement at maximum load of the sheet which is 150 µm thick, measured by the falling weight impact test method conforming to ASTM-D3763, is 10.0 mm or less, particularly 9.5 mm or less. When the displacement at maximum load is 10.0 mm or less, the sheet material is plastically deformed sufficiently without rupture, and the obtained synthetic resin formed caps are uniformly shaped with a shape retaining property. When the displacement at maximum load is 9.5 mm or less, more remarkable effect can be obtained. The displacement at maximum load in the falling weight impact test described herein refers to the amount of displacement (the amount of displacement between the tip of falling weight and the surface of a test piece of the sheet) at the time of maximum loading. In addition, a value obtained by the falling weight impact refers to a value measured with the use of a weight having a holder of 45 mm in diameter and an impact core of 13 mm in diameter, at the rate of fall of the impact core of 5.0 M/sec.

The resin sheet for cold forming used can be colored, for instance, white-colored. In particular, when the sheet contains a polystyrene-based resin, it is preferable that either one of the base material layer or the functional layer, or both of them are white-colored. When the sheet containing a polystyrene-based resin is formed and processed, a bended part wherein plastic deformation has occurred is whitened. Consequently, when these layers themselves have been white-colored in advance, the whitening of the bended part caused by plastic deformation would be less noticeable. For the white-coloring of these layers, the sheet can be manufactured by adding white pigments and dyes, such as titanium oxide and zinc oxide, to a raw resin in the range of 0.5 to 8% by weight.

The resin sheet for cold forming used can be manufactured by known methods using a sheet extruding device, a press processing device, etc. The sheet can be manufactured as a single base material layer, or a laminated body of the base material layer and one or more functional layers, for example, by a method wherein the base material layer and the functional layer are co-extruded simultaneously by using the sheet extruding device; a method wherein the base material layer and the functional layer are dry-laminated by using a two-component reactive adhesive; a method wherein the base material layer and the functional layer are laminated by thermal lamination; a method wherein the functional layer is extrusion-coated on the base material layer; a method wherein the printing is performed on the base material layer or the functional layer; or by an appropriate combination of these methods.

The resin sheet for cold forming has been explained in detail. The thickness of the resin sheet for cold forming differs depending on the kinds and shapes of the synthetic resin formed cap, and is not particularly limited. Usually, the ones whose thickness is 0.2 mm or less, which are recognized as a film, and the ones whose thickness is 1 mm or more, which are recognized as a thin plate, are also included in the resin sheet for cold forming. When the resin sheet for cold forming is a sheet containing a polystyrene-based resin, it is preferable that the thickness of the sheet is in the range of 50 µm to 1 mm, in particular, in the range of 80 µm to 300 µm. When the thickness of the sheet is 50 µm or more, the synthetic resin formed cap, the one with strength, can be manufactured from the polystyrene-based resin sheet. When the thickness is 80 µm or more, more remarkable effect can be obtained. When the thickness of the sheet is 1 mm or less, the sheet material is plastically deformed at the time of cold forming and the resin cap having a shape retaining property can be obtained. When the thickness is 300 µm or less, more remarkable effect can be obtained.

The resin sheet for cold forming is applied to so-called press forming method wherein the resin packaging material sheet is plastically deformed and pulled into shape by sandwiching the packaging material sheet between a pair of a former (male die) and a forming die (female die), pushing the sheet into the forming die by using the former and pressing the sheet at high speed. Plastic deformation is a deformation which occurs when loaded stress exceeds elastic limit of a material. Deformation becomes significant by loading stress equal to the yield point or higher on the material, and the resin cap having a shape retaining property can be obtained. Molding pressure is not particularly limited, and can be selected appropriately according to the kind of the resin sheet, the shape of the resin cap, etc. As mentioned above, high speed pressing is generally performed at room temperature or ordinary temperature without heating, but in some cases, it can be performed under low temperature heating, at a temperature lower than a glass transition point (Tg) of the resin that substantively constitutes the resin sheet. For example, when the resin sheet is a polystyrene-based resin sheet, high speed pressing can be performed at a temperature lower than 80° C, preferably in the temperature range of 10 to 60° C, and also at ordinary temperature or room temperature.

Further, with regard to the container body (resin formed product) to which the synthetic resin formed cap is fixed, there is no limitation as to its material, shape, form, etc. Though any material can be used as the material of the resin formed product, it is preferable to use the same kind of resin as the synthetic resin formed cap, and the one containing, for example, PS (polystyrene)-based resin such as PS resin, AS (styrene-acrylonitrile copolymer) resin, ABS (acrylonitrile-butadiene-styrene copolymer)-based resin, and AXS (terpolymer having acrylonitrile and styrene components) resin; PET-based resin such as unsaturated polyester resin and saturated polyester resin; polyethylene-based resin such as high-density polyethylene, low-density polyethylene, EVA (ethylene-vinyl acetate copolymer) resin, EVOH (ethylene-vinyl alcohol copolymer) resin; polypropylene-based resin; other polyolefin-based resin; polyacetal-based resin; and polycarbonate resin, can be exemplified, or it can be a material containing one or more kinds of these resins. Among them, the ones containing PS-based resin, ABS-based resin and PET-based resin are particularly preferable. Further, additives such as plasticizers, stabilizers,flame retardants, antioxidants, ultraviolet absorbers, colorants, antistatic agents, and subsidiary material additives such as reinforcing agents and filling agents can be appropriately added to these resins. As for a shape/form of the resin formed product which contains such resin, any shape/form including film, sheet, plate, bar, pipe, laminated body, fabric, net, nonwoven, various containers, packaging material, parts of various equipments can be used. As for a method for forming the product, any method including compression molding, transfer molding, laminate molding, injection molding, extrusion molding, blow molding, calendering, and cast forming can be used.

The sealing device mentioned above is not particularly limited and it may be an adhesion device, a welding (fusion welding) device, or the like, as long as it is a device capable of sealing openings at the upper ends of container bodies with formed caps to make sealed containers. Examples of welding (fusion welding) devices include hot plate welding devices, hot-air welding devices, impulse welding devices, and ultrasonic welding devices. Among them, ultrasonic welding devices, in particular, the ultrasonic sealing device which causes ultrasonic rotational vibration in a rotating direction about an axis parallel to the direction of application of the pressure for pressurizing formed caps and container bodies to act (see PCT/JP02/02225) can be preferablyexemplified from the viewpoint that welding can be conducted with an elevated degree of uniformity and at a higher speed. For example, ultrasonic welding of the open resin container and the cap manufactured from the resin sheet having the sealant layer can be conducted with the use of an ultrasonic welding device of specific specification used for the specific purpose, in addition to a common ultrasonic welding device, by emitting ultrasonic wave whose frequency is 15 to 50 kHz, preferably 20 to 40 kHz, and whose amplitude is 16 to 126 µmpp, preferably 40 to 80 µmpp toward the adhesion face. As for a condition of the ultrasonic welding, for example, in the case where a cold-formed cap is sealed to an opening of a polystyrene-based resin container and thus a sealed container is made, it is preferable that the frequency is 20 to 40 kHz, the output is 50 to 100 w/piece, the irradiation time is 0.2 to 1 second, etc. The cap of the resin container such as a beverage container welded under the condition thus described can be peeled by fingers, and at the same time, peel strength which prevents the cap from peeling off even if the sealed container is dropped inadvertently can be obtained. Further, an example of an adhesion device includes a device which can conduct the following steps: by applying various adhesives to the predetermined surface of the resin cap or the resin formed product, or by providing the sealant layer containing constituents of the adhesives on the resin sheet for cold forming, the sealant layer capable of obtaining fixing strength, for example, to the extent that the resin cap can be peeled from the resin formed product by fingers, is prepared; and then pressure application and deposition are appropriately carried out while adjusting the fixing strength.

As for the fixing strength between the resin formed product and the synthetic resin formed cap, the peel strength is preferably in the range of 6 to 20 N/15 mm in width in a 180° peel test according to JIS-K6854, and more preferably in the range of 8 to 15 N/15 mm in width. The peel strength is a value measured as follows: a sheet manufactured from a resin material having the same kind of composition as the resin formed product and the resin sheet for cold forming are welded, for example, by the ultrasonic welding method, and the peel strength (180° peeling) is measured while setting the opening of both sheets at 180° . When the peel strength is 6 N/15 mm in width or more, in the case where the resin formed product is a beverage container, even if the container is dropped with the contents filled, the cap is not peeled, so the leakage of the content is prevented. When the peel strength is 20 N/15 mm in width or less, there is no difficulty in peeling the cap by hand. When the peel strength is in the range of 8 to 15 N/15 mm in width, it is more preferable as the above-mentioned effect can be more surely obtained.

The synthetic resin formed cap basically has the form and physical property possessed by the resin sheet for cold forming. In other words, it can be constituted only of the base material layer as a single-layer structure, or it can be the one having the functional layer laminated on both surfaces or either one of the surfaces of the base material layer. Examples of the functional layer include a sealant layer having an adhesive function, an antistatic layer having an antistatic function, and other layers including a printing layer and a barrier layer. As for the above-mentioned base material layer, the one containing a composition consisting of 100 to 70% by weight of high impact polystyrene (A) and 0 to 30% by weight of styrene-butadiene copolymer (B) is preferable, and further it is preferable that the high impact polystyrene (A) has soft component particles that have a swelling degree of 30 or less and an average particle diameter in the range of 0.5 to 10 µm because the cap having an excellent shape retaining property can be obtained. Furthermore, a sealant layer, an antistatic layer, a printing layer, a barrier layer, etc., laminated as the above-mentioned functional layer have the same functions and constitutions as these functional layers in the resin sheet for cold forming.

As for the sealed container provided with the synthetic resin formed cap, it is preferable that the cap and the resin container contain the same kind of resin as a main component from the viewpoint of the improvement of recycling efficiency. In particular, the one wherein both the cap and the resin container contain a polystyrene-based resin as a main component is preferable because it is excellent in tensile strength, heat resistance, light resistance, formability and surface luster. Further the one manufactured with the resin sheet containing a high impact polystyrene as a main component is preferable because it does not get damaged even if the container is dropped inadvertently, and has an excellent impact resistance. Furthermore, if the peel strength between the cap and the open resin container is arranged by the ultrasonic welding method, etc., to be in the range corresponding to 6 to 20 N/15 mm in width of 180° peel test, it is possible to drink the contents of the resin container without generating peeling between the cap and the resin container when a straw is stuck into the cap.

With regard to the secondary cap forming device mentioned above, there is no particular limitation as long as it is a device capable of forming a cap of a sealed container formed by the primary cap cold forming device into a final cap shape. Here, the term "final cap shape" means a cap shape substantially same as those of product containers using conventional cap materials wherein an aluminum foil layer is used as a base material. As the secondary cap forming device, a device having a drawing means or a drawing/twisting means for a cap skirt part of a sealed container, and a device having a heating means for a cap skirt part of a heat-shrinkable synthetic resin formed cap can be exemplified. Here, the term "a drawing means for a cap skirt part of a sealed container" refers a means for drawing or cramping a cap skirt part of a sealed container, and the term "a drawing/twisting means for a cap skirt part of a sealed container" refers a means for twisting a cap skirt part or a sealed container body while a cap skirt part of a sealed container is being drawn or cramped, or a means for twisting a cap skirt part and a sealed container body in the counter direction while a cap skirt part of a sealed container is being drawn or cramped. It is preferable to set a step for heating a cap skirt part of a sealed container with the use of a heating means as a step prior to a drawing step or a drawing/twisting step of a cap skirt part of a sealed container with the use of the drawing means or the drawing/twisting means. Further, as a cap material for the heat-shrinkable synthetic resin formed cap mentioned above, any cap material can be used as long as it can be used for cold forming and is heat-shrinkable, and heat-shrinkable synthetic resin sheets such as polystyrene, polyolefin, polyester, polyvinyl chloride can be exemplified.

As the above-mentioned secondary cap forming device having a drawing means, a secondary cap forming device having a means capable of setting a cap skirt part of a placed sealed container in a setting-in hole or a setting-in recess can be exemplified. Further, as the secondary cap forming device having a drawing/twisting means, a secondary cap forming device having a drawing means having a setting-in hole or a setting-in recess, in which a cap skirt part of a placed sealed container can be set, and a means for twisting a cap skirt part and/or a sealed container body while a cap skirt part is being drawn, in other words, a means for twisting a cap skirt part or a sealed container body, or a means for twisting a cap skirt part and a sealed container body in the counter direction, can be exemplified. In addition to that, a secondary cap forming device which follows the steps of: forcibly rotating and transferring a sealed container by the combination of a transfer conveyor and a screw conveyor, between which there is a difference in transfer speed; contacting a cap skirt part of the sealed container being rotated and transferred with a synchronous belt or the like which rotates in a direction opposite to the transfer direction and same as the rotation direction; and causing a twist at the cap skirt part of the sealed container by the friction between the cap skirt part and the synchronous belt or the like, can be exemplified.

As the above-mentioned drawing means having a setting-in hole or a setting-in recess, in which a cap skirt part of a placed sealed container can be set, a drawing means having: a container table for placing a sealed container thereon; a female forming member having a setting-in hole or a setting-in recess, in which a cap skirt part of a sealed container placed on the container table can be set; and an elevating mechanism for moving the container table and/or the female forming member close to or away from each other such that a cap skirt part of a sealed container can be set in/withdrawn from a setting-in hole or a setting-in recess of the female forming member, can be exemplified. For example, the container table may be a straightly transferred transfer conveyor, and in this case, there will be no inconvenience when an upper end of a sealed container can be set in/withdrawn from a forming hole of a forming means by the box motion operation of the forming means. As a female forming member mentioned above, a female forming member simply having a setting-in hole or a setting-in recess, in which a cap skirt part of a sealed container placed on the container table can be set (female forming member of simple setting-in type), and a female forming member having: an extrusion piston which is provided such that it can reciprocate in a cylindrical hollow part of the female forming member, and which has a setting-in hole or a setting-in recess, in which a cap skirt part of a sealed container can be set, at the lower end; and a means for urging the extrusion piston toward an open end of a formed hole (female forming member of extrusion piston setting-in type), can be exemplified.

Further, as a twisting means for a cap skirt part in the above-mentioned means for twisting a cap skirt part and/or a sealed container body while a cap skirt part is being drawn, the followings can be exemplified: a means for rotating a female forming member having a setting-in hole or a setting-in recess, in which a cap skirt part of a sealed container can be set, in the female forming member of simple setting-in type, and a means for rotating an extrusion piston particularly in the female forming member of extrusion piston setting-in type. As a rotating means, a rotating means wherein rotation is caused by a small servomotor directly connected to a female forming member or a piston rod of an extrusion piston, or a means for rotating a gear fixed to a female forming member or a piston rod of an extrusion piston with a synchronous belt being wrapped around a plurality of pulleys, can be exemplified. In addition, as a twisting means for a sealed container body, a means for rotating a sealed container body by transferring a sealed container by the combination of a transfer conveyor and a screw conveyor, between which there is a difference in transfer speed, and a means for rotating a sealed container body with the use of a longitudinal axis of the sealed container as a rotary axis in the container table wherein the sealed container body is fixed by a container holder, can be exemplified.

The aforementioned heating means is not particularly limited as long as it is a means capable of heating a cap skirt part of a sealed container, however, a means capable of heating, in particular, uniformly heating all around of a cap skirt part is preferable. For example, a hot air nozzle for injecting hot air to a cap skirt part of a sealed container can be exemplified, and in this case, it is preferable to further comprise a rotating means for rotating and transferring a sealed container with the use of a longitudinal axis of the sealed container as a rotary axis. Further, it is more preferable that a hot air cover is provided above the transfer route for rotating and transferring a sealed container. In addition to that, a heating means wherein a heating mechanism is provided in the vicinity of a setting-in hole or a setting-inrecess of the female forming member mentioned above, in which a cap skirt part of a sealed container can be set, can be preferably exemplified.

Among the secondary cap forming devices mentioned above, the following devices, such as the ones described in Example, can be preferably exemplified. Such devices are those which have: a container table for placing a sealed container thereon; a female forming member having a setting-in hole or a setting-in recess, in which a cap skirt part of a sealed container placed on the container table can be set; and an elevating mechanism for moving the container table and/or the female forming member close to or away from each other such that a cap skirt part of a sealed container can be set in/withdrawn from a setting-in hole or a setting-in recess of the female forming member, wherein the above-mentioned female forming member has: an extrusion piston which is provided such that it can reciprocate in a cylindrical hollow part of the female forming member, and which has a setting-in hole or a setting-in recess, in which a cap skirt part of a sealed container can be set, at the lower end; and a means for urging the extrusion piston toward an open end of a formed hole, and wherein the means for twisting a cap skirt part, while the cap skirt part is being drawn, by rotating a gear fixed to apistonrod of an extrusion piston with a synchronous belt being wrapped around a plurality of pulleys, is provided. Among them, devices having a heating means for heating a cap skirt part of a sealed container before twisting the cap skirt part while the cap skirt part is being drawn, for example, a heating means having a hot air nozzle for injecting hot air to a cap skirt part of a sealed container, and a rotating means for rotating and transferring a sealed container with the use of a longitudinal axis of the sealed container as a rotary axis, are particularly preferable.

Hereinafter, the present invention is described more specifically with reference to drawings, however, the technical scope of the present invention is not limited to these exemplifications.

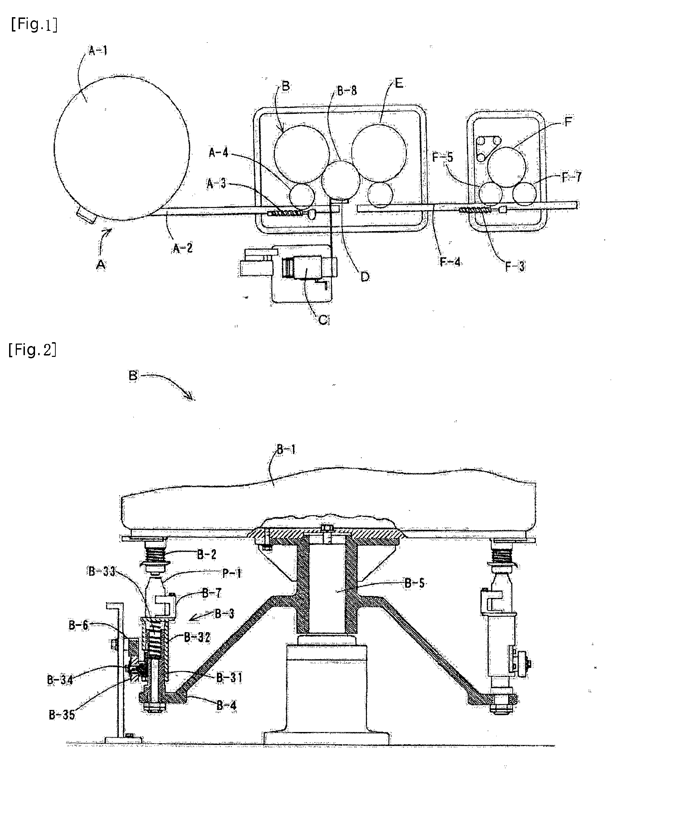

In Fig. 1, one embodiment of the filling/packaging machine of the present invention is shown as an overall plan view. As shown in Fig. 1, the filling/packaging machine of the present invention comprises: a container feeding device A for feeding a synthetic resin bottomed tubular container body to a filling device; a filling device B for filling a content in a container body fed; a primary cap cold forming device C for forming a synthetic resin formed cap which has a disk-shaped cap body and a skirt part provided such that it is suspended from a peripheral part of the cap body, from a sheet-like cap material; a cap feeding device D for feeding a formed cap to an opening at an upper end of a container body filled with a content; a sealing device E for sealing an opening at an upper end of a container body with a formed cap to make a sealed container; and a secondary cap forming device F for forming a cap of a sealed container formed by the primary cap cold forming device into a final cap shape.

The above-mentioned container feeding device A comprises a container setting-up device A-1, a transfer conveyor A-2, and a screw conveyor A-3. In the container setting-up device A-1, bottle-like synthetic resin containers , whichhave been fed while facing in a random direction, are set up such that an opening at an upper end thereof faces upward, and placed on the transfer conveyor A-2 in a line. The containers placed on the transfer conveyor A-2 are transferred to the downstream side, and aligned in a prescribed pitch by the screw conveyor A-3 at the downstream part of the transfer conveyor. The aligned containers are fed to the filling device B via an inlet star wheel A-4. In the filling device B, the containers are filled with a content while the containers are rotated and moved within the device. The containers filled with the content are transferred to an intermediate star wheel B-8.

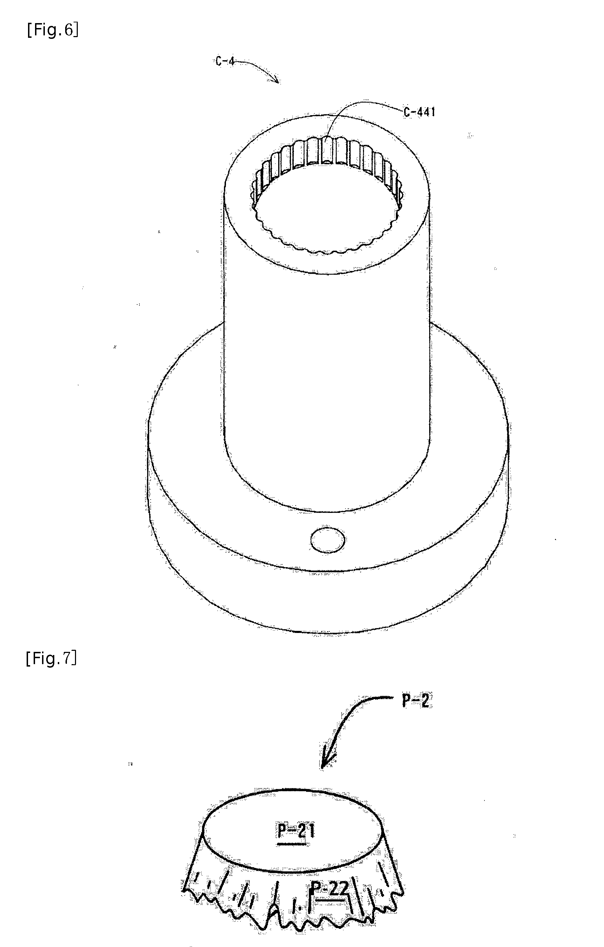

In the vicinity of the filling device B of the filling/packaging machine, the primary cap cold forming device C is provided. In the primary cap cold forming device C, a synthetic resin sheet-like cap material S is punched out in a substantial disk-shape, and the punched-put cap material is formed into a substantial U-shape in cross section, that is, formed into a cap P-2 consisting of a disk-shaped cap body P-21 and a skirt part P-22 provided such that it is suspended from a peripheral part of the cap body (see Fig. 7). The formed cap P-2 is placed on an opening at an upper end of a container being transferred by the intermediate star wheel B-8.

Subsequently, the containers filled with the content and on which caps are placed are fed to the sealing device E. In the sealing device E, the containers are sealed with the caps while the containers are moved within the device. The sealed containers are placed on a transfer conveyor F-4. The containers placed on the transfer conveyor F-4 are transferred to the downstream side, and aligned in a prescribed pitch by a screw conveyor F-3 at the downstream part of the transfer conveyor. The aligned containers are fed to the secondary cap forming device F via an inlet star wheel F-5. In the secondary cap forming device F, the caps with which the containers are sealed are secondarily formed to make containers of final shape while the containers are moved within the device. The containers of final shape are discharged onto the transfer conveyor F-4 via an outlet star wheel F-7.

In Fig. 2, a longitudinal cross section of the filling device B is shown. As shown in Fig. 2, the filling device B has: a filling liquid tank B-1, which is a circular shape in a plan view; and a prescribed number of filling nozzles B-2 provided downward and at even intervals on the undersurface of a peripheral part of the filling liquid tank; a container placing table B-3 provided below the filling nozzles, at a position corresponding to the filling nozzles; and a turntable B-4 equipped with the container placing table B-3. The turntable B-4 and the filling liquid tank B-1 are fixed to a drive shaft of filling device B-5, and rotated in an integrated manner by the drive shaft B-5. The container placing table B-3 is constituted of: a fixed part B-31, which is fixed to the turntable B-4 and extended upward from the turntable; and a tubular move part with a closed upper end B-32, which is placed over the fixed part B-31 such that it is vertically slidable, and whose upper end is closed with a top surface. The move part B-32 is urged upward by a spring B-33 provided upward in the middle of the fixed part B-31. A roller shaft B-34 is provided outwardly at the outer side of the lower part of the move part B-32, and a rotatable roller B-35 is provided at the roller shaft B-34. A cam B-6 which abuts the roller 35 and controls the position of the move part B-32 is provided at the outer side of the container placing table B-3. A container holder B-7, whose horizontal cross section is substantially U-shaped, is provided at the top surface of the move part B-32, thereby positioning a container body P-1 from the inner side thereof. A guide, which is not shown, is provided at the outer side of the container holder B-7, along the container transfer route, and it is constituted such that containers positioned by the container holder B-7 are guided and transferred along the guide.

When the container body P-1 is transferred to the container sending-in position, the move part B-32 of the container placing table B-3 has been pushed down by the cam B-6, and the top surface of the move part B-32 has descended to the level where the container P-1 can be placed thereon. When the container body P-1 is placed on the container placing table B-3 and begins to be rotated and moved within the filling device B, the move part B-32 of the container placing table B-3 is gradually freed from the positioning control by the cam B-6, and moved upward by the urging force of the spring B-33 . The container on the container placing table B-3 is pressed against the filling nozzle B-2 by the urging force of the spring B-33. A filling valve of the filling nozzle B-2 is set free by pressing the container body P-1 against the filling nozzle B-2, a filling liquid is filled in the container. When the filling is finished, the move part B-32 of the container placing table B-3 is gradually pushed down by the cam B-6 to the level where the container body P-1 can be transferred to the intermediate star wheel B-8. The container body P-1 is transferred to the intermediate star wheel B-8 at the container sending-out position.

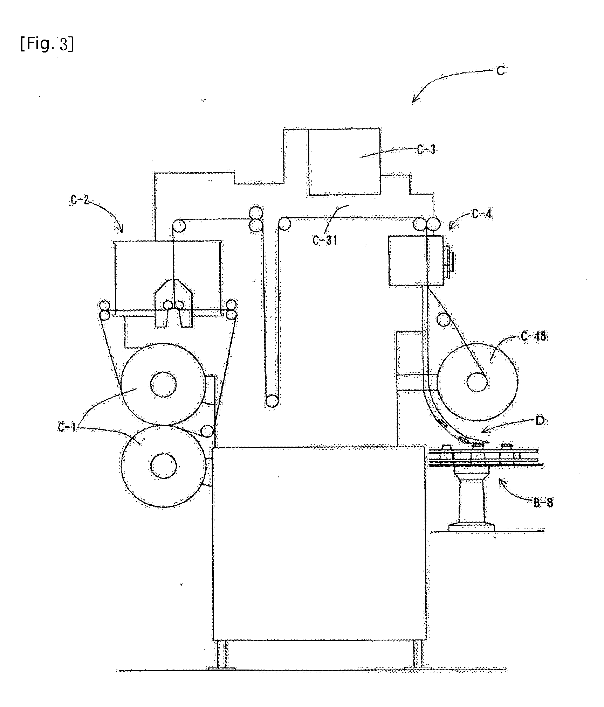

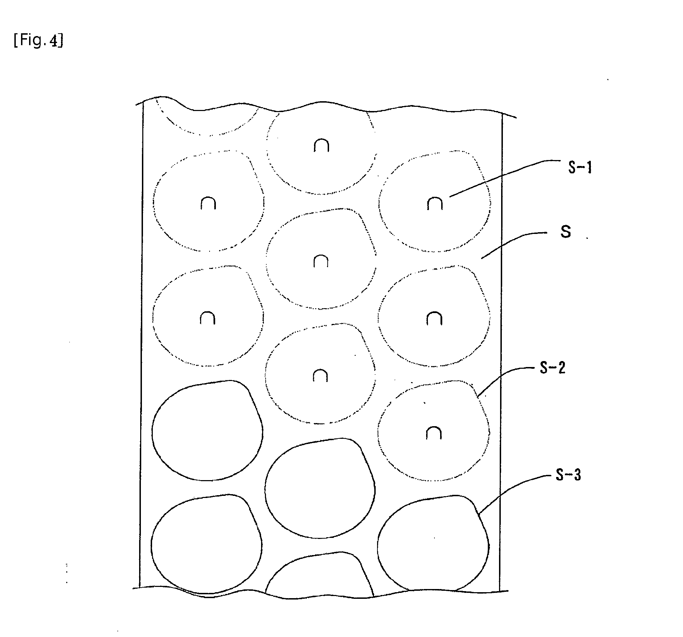

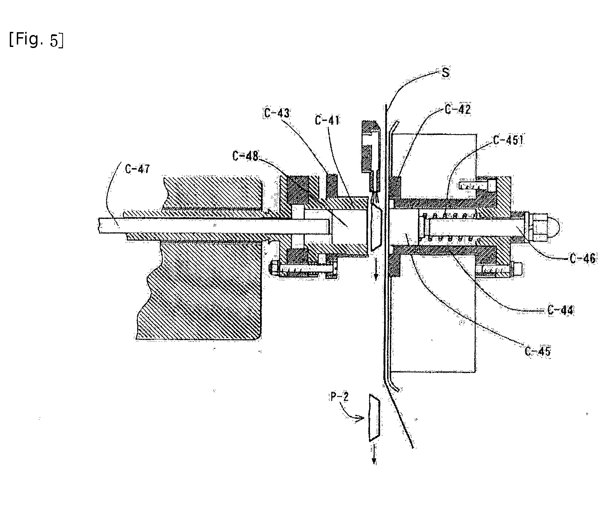

In Fig. 3, the whole of the primary cap cold forming device C is shown, and in Fig. 4, a sheet-like cap material S is shown. As shown in Fig. 3, the primary cap cold forming device C comprises a roll of cap material C-1, an automatic cap material feeding device C-2, a half-cutting device C-3, a cap punching-out and forming device C-4, and a recovery roll C-5. The synthetic resin sheet-like cap material S, which is rolled, is guided to the half-cutting device C-3 via the automatic cap material feeding device C-2. The half-cutting device C-3 forms a substantially U-shaped groove S-1 on the sheet-like cap material S by a laser C-31 as shown in Fig. 4. The groove S-1 secures an openability at the time of sticking a straw into the cap P-2 of the container. In Fig.4, S-2 and S-3 indicate a proposed line for punching out a cap, and a hole made by punching out a cap, respectively. The sheet-like cap material S wherein the groove S-1 is formed by the half-cutting device C-3 is guided to the cap punching-out and forming device C-4 shown in Fig. 5.

Fig. 5 shows a cross section of the cap punching-out and forming device C-4 which comprises: a cap material punching out means for punching out one or more cap materials from the sheet-like cap material S, which is provided with a movable blade (male blade) C-41, a fixed blade (female blade) C-42, and a holding member C-43 for the sheet-like cap material S; and a cap forming means having a forming die C-44 wherein a plurality of grooves C-441 is provided on the inner circumferential surface thereof (see Fig. 6), a cap pushing-back piston C-45 provided in the forming die C-44, and a former C-48 formed at the end of an operating rod for reciprocating former C-47. When the sheet-like cap material S is intermittently fed downward from up above and a part to be punched out reaches the position corresponding to the forming die C-44, the movable blade C-41 advances, one or more substantially disk-shaped cap materials are punched out from the sheet-like cap material S in cooperation with the fixed blade C-42, and the punched-out cap is formed such that its cross section is substantially U-shaped. At this point, the apical surface of the former C-48 has advanced to contact the packaging material S, and after punching out, it further advances to a prescribed position to push the cap pushing-back piston C-45. As the former C-48 advances, the cap pushing-back piston C-45 goes back against the force of a spring C-451. Consequently, a part of a cap material located outside the inner diameter of the forming die C-44 (a part that forms a skirt part P-22 of a cap P-2) is folded at a folded part P-23, and slid while being held by being pinched between the inner circumferential surface of the forming die C-44 where the grooves C-441 are provided and the outer circumferential surface of the former C-48, and folds are guided to the skirt part P-22 of the cap by a plurality of grooves C-441 provided on the inner circumferential surface of the forming die C-44, so that the cap P-2 comprising a cap body (flat part) P-21 and the skirt part P-22 (see Fig. 7) is formed. After the cap is formed, as the former C-48 returns to its initial position, the piston C-45 is advanced by repulsion of the spring C-451 to push back the formed cap P-2. The caps P-2, which are pushed-back and formed such that its cross section is substantially U-shaped, are dropped onto the cap feeding device (chute) D located below, and the caps are placed one by one on the openings at the upper ends of the containers P-1 being transferred by the intermediate star wheel B-8. The sheet-like cap material wherein caps have been punched out is recovered by the recovery roll C-48. As described above, the cap punching-out and forming device C-4 is not equipped with aheatingmechanism, and is capable of forming caps by causing plastic deformation to a resin sheet-like cap material by cold forming.

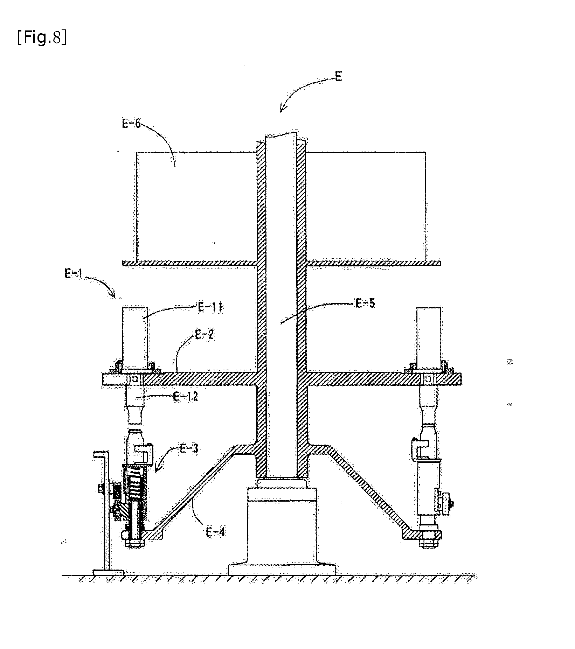

The containers filled with the content and on which caps are placed are subsequently fed to the sealing device E. An overall cross section, which is one embodiment of the sealing device E, is shown as Fig. 8. This sealing device E comprises: an upper turntable E-2 wherein a prescribed number of ultrasonic sealing devices E-1 is provided in a fixed condition at the peripheral part thereof at even intervals, and a lower turntable E-4 wherein a container table E-3 is provided in a fixed condition at the corresponding position below the ultrasonic sealing device. The upper turntable E-2 and the lower turntable E-4 are fixed to a drive shaft of sealing device E-5. Above the ultrasonic sealing device E-1, a controlling device E-6 of the sealing device E is provided. The ultrasonic sealing device E-1 comprises a sealing device body E-11 provided in a fixed condition at the upper turntable E-2, and a round-bar-shaped horn E-12 which projects downward from the sealing device body E-11 and has a sealing action face at its lower end, and an oscillator, which is not shown, is built into the sealing device body E-11. The oscillation is conducted to the sealing action face of the horn E-12 by the oscillator. Due to the elevation of the container table E-3, caused by the same mechanism as the elevating mechanism in the container placing table B-3 in the filling device B mentioned above, the container P on the container table is pressed against the sealing action face at the lower end of the horn E-12 of the ultrasonic sealing device E-1, resulting that the container body P-1 and the cap P-2 are heat-sealed.

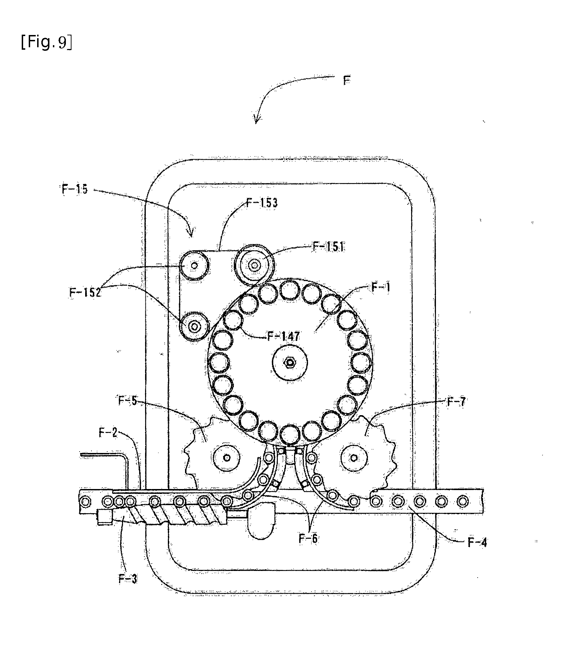

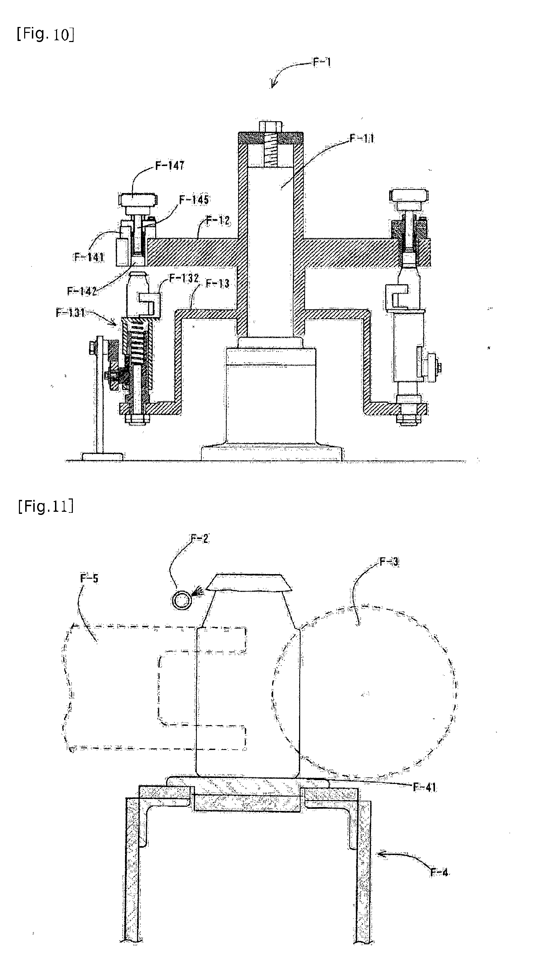

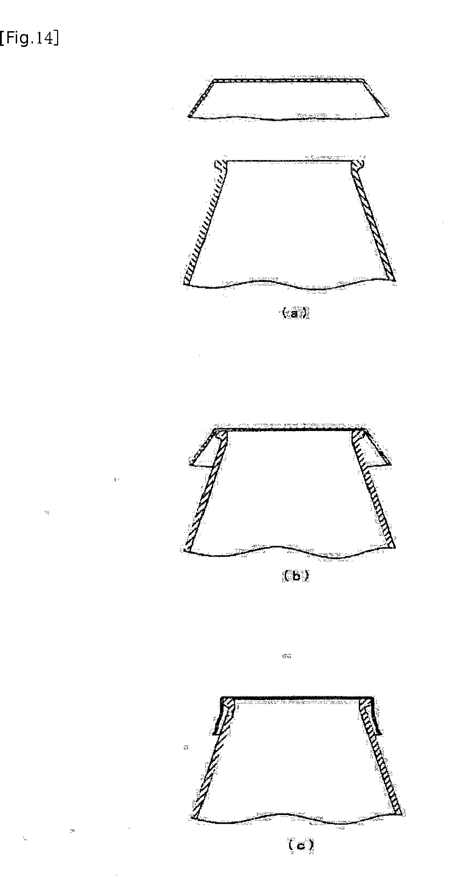

The characteristic secondary cap forming device F of the filling/packaging machine of the present invention is described in Figs. 9 to 14. Fig. 9 is a plan view of the secondary cap forming device F, and Fig. 10 is a longitudinal cross section of the secondary cap forming device body in the secondary cap forming device F. In addition, Fig. 14 (a) shows cross sections of a cap and a container body which have been primarily formed before sealing, (b) shows cross sections of a cap and a container body which have been primarily formed after sealing, and (c) shows cross sections of a cap and a container body after they are secondarily formed.

The secondary cap forming device F has a heating means for heating the cap skirt P-22 sealed at the upper end of the sealed container, a rotating means for rotating the container at the position for heating container caps by the heating means with the use of a longitudinal axis of the container as a rotary axis, and a secondary cap forming device body F-1 for secondarily forming the cap of the container. The heating means comprises a pipe-like hot air nozzle F-2 provided along the cap skirt of the container being transferred, before it is sent into the secondary cap forming device body. The rotating means rotates the container by a difference in transfer speed between a screw conveyor F-3 and a transfer conveyor F-4. The secondary cap forming device body F-1 has an upper turntable F-12 and a lower turntable F-13 which are fixed to a drive shaft F-11 of the secondary cap forming device F. In the lower turntable F-13, a plurality of the container tables F-131 for placing containers is provided at the peripheral part thereof at even intervals, and at the upper part of the container table F-131, the container holder F-132 is fixed. In the upper turntable F-12, a forming means having a forming hole, into which the upper end of the sealed container P placed on the container table F-131 can be inserted, is provided at the corresponding position above the container table F-131. The container table F-131 has the same elevating mechanism as that of the filling device B and the sealing device E mentioned above.

The sealed container P on a transfer belt F-41 which have been transferred by the transfer conveyor F-4 is first aligned at a prescribed pitch by the screw conveyor F-3. The aligned sealed container P is fed to the secondary cap forming device body F-1 by a recess of an inlet star wheel F-5 and a guide F-6. The pipe-like hot air nozzle F-2 is provided at a position along the cap skirt P-22 of the sealed container P being transferred, from the screw conveyor F-3 to the inlet star wheel F-5. In the hot air nozzle F-2, a hot air blowout hole faced to the cap skirt P-22 is provided. The cap skirt P-22 of the container is heated by hot air blown out from the hot air blowout hole. There is a difference in transfer speed between the transfer conveyor F-4 and the screw conveyor F-3, and by this difference in speed, the sealed container P being aligned on the screw conveyor F-3 is rotated. The sealed container P being transferred on the inlet star wheel F-5 is also rotated by the friction resistance to the guide F-6. By this rotation of the sealed container P, the circumferential surface of the cap skirt P-22 of the container as a whole can be uniformly heated. In Figs. 9 and 11, the hot air nozzle F-2 is provided only at the left side of the container transferring direction, however, it is preferable to provide it on both sides when improving the ability (increasing the speed) of the filling/packagingmachine. In addition, it is more preferable to provide a hot air cover (illustration is omitted) above the container transferring route from the screw conveyor F-3 to the inlet star wheel F-5.

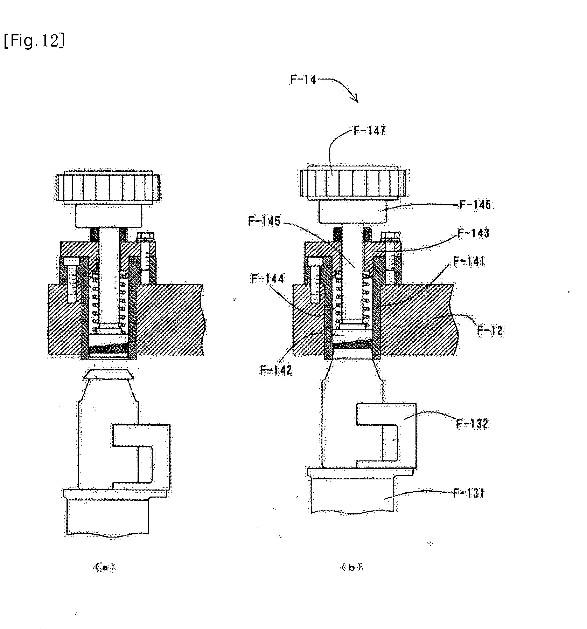

Fig. 12 is an enlarged cross section of a forming and processing part F-14 of a forming means. The forming and processing part F-14 has a tubular female die F-141 wherein a forming hole is formed, and an extrusion piston F-142 which is provided such that it can slide into the forming hole, and which has a setting-in recess, in which a cap skirt P-22 part can be set, at the lower end. A spring holder F-143 is fixed to the other end of the tubular female die F-141, and the extrusion piston F-142 is urged to one open end side of the forming hole by a spring F-144 abutting the spring holder F-143. To the extrusion piston F-142, a piston rod F-145 which penetrates the spring holder F-143 and extends to the other end side of the tubular female die F-141 is connected. To the tip end of the piston rod F-145, a stopper F-146 and a gear F-147 are fixed. The extrusion piston F-142 being urged to one end side of the forming hole can be stopped in the vicinity of the open end of the forming hole by the stopper F-146.

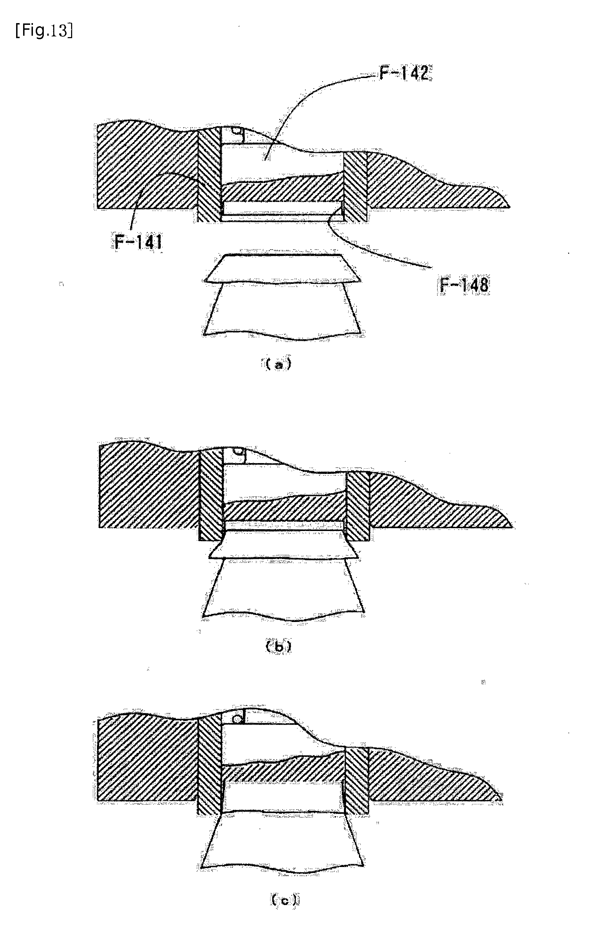

Fig. 13 is an enlarged cross section of one end of the forming hole and its vicinity. On the face of the extrusion piston F-142 which abuts the cap skirt P-22 part, a setting-in recess F-148 is formed as mentioned above, the cap skirt P-22 part is set in the setting-in recess F-148 whose diameter is smaller than that of the forming hole, and the cap skirt P-22 part is set in the setting-in recess of the extrusion piston F-142 by the abutting of the top surface of the cap on the abutting face, which is a bottom of the setting-in recess of the extrusion piston.

The secondary cap forming device body F-1 comprises a forming auxiliary part F-15 having a synchronous belt F-153 which is wrapped around one driving pulley F-151 and two driven pulleys F-152 (see Fig. 9), and is arranged such that the gear F-147 engages with the synchronous belt F-153, which is continuously rotated clockwise in a plan view, at a prescribed position in the transfer circumferential route of the gear F-147 mentioned above.

Next, the secondary cap forming and processing is hereinafter described. The sealed containers P, wherein the circumferential surface of the cap skirt P-22 is heated, are sequentially placed on the container table F-131. The sealed container P on the container table is gradually elevated by the elevating mechanism mentioned above. It is constituted such that: the cap skirt P-22 of the elevated sealed container P is pushed and set in the forming hole formed by the tubular female die F-141; and when the container table F-131 reaches the ascent limit, the upper surface of the cap P-21 abuts the bottom of the setting-in recess F-148 of the extrusion piston F-142, the heated cap skirt P-22 part is set in the setting-in recess F-148 of the extrusion piston F-142 to apply a pressing force to the cap skirt P-22 part, and in addition to that, the gear F-147 is rotated by the driving force of the synchronous belt F-153, and thereby the extrusion piston F-142 is rotated through the piston rod F-145. By the rotation of the extrusion piston F-142, a rotating force acts on the sealed container P. However, because the rotation of the container body P-1 is limited by the container holder F-132 mentioned above, a twisting force is applied while the cap skirt P-22 part with which the container body P-1 is sealed is being cramped by the setting-in. As described above, the secondary forming of the caps is secured by the cooperation of the pressing force and the twisting force, and as shown in Fig. 14 (c), the secondary forming of the caps is completed and final formed products are obtained. After the completion of the secondary forming, the container table F-131 descends, the cap P-2 is pushed out from the forming hole by the extrusion piston F-142, and the sealed container P on the container table is discharged onto the transfer conveyor F-4 via the outlet star wheel F-7.

### Industrial Applicability

With the use of the filling/packaging machine of the present invention, a cap formed from a synthetic resin sheet-like cap material is placed on a synthetic resin container filled with a content, and product containers, which are equivalent to those using conventional cap materials wherein an aluminum foil layer is used as a base material, can be obtained.

## Claims

1. A filling/packaging machine for filling a content in a container body (P-1), for placing a cap (P-2) on the container body (P-1) filled with the content, and for sealing the container body (P-1) with the cap (P-2) to make a sealed container (P), which comprises: a container feeding device (A) for feeding a synthetic resin bottomed tubular container body to a filling device; a filling device (B) for filling a content in a container body fed; a primary cap cold forming device (C) for forming a synthetic resin formed cap which has a disk-shaped cap body (P-21) and a skirt part (P-22) provided such that it is suspended from a peripheral part of the cap body, from a resin sheet for cold forming; a cap feeding device (D) for feeding a formed cap to an opening at an upper end of a container body (P-1) filled with a content; a sealing device (E) for sealing an opening at an upper end of a container body with a formed cap to make a sealed container; and a secondary cap forming device (F) for forming a cap (P-2) of a sealed container formed by the primary cap cold forming device (C) into a final cap shape, wherein the primary cap cold forming device (C) comprises a cap material (C-1) punching-out means for punching out one or more cap materials from the resin sheet for cold forming, and a cap forming means having a forming die (C-44) and a former for forming the cap material (C-1) punched out by the cap material punching-out means, and has a cap punching-out and forming device (C-4) wherein a plurality of grooves (C-441) or projections are provided on an inner circumferential surface of the forming die (C-44), and/or a plurality of grooves (C-441) or projections are provided on an outer circumferential surface of the former (C-48), and
the secondary cap forming device (F) has a drawing means or a drawing/twisting means for a cap skirt (P-22) part of a sealed container (P),
wherein the drawing/twisting means for a cap skirt (P-22) part of the sealed container (P) has a drawing means having a setting-in hole or a setting-in recess (F-148), in which a cap skirt (P-22) part of a placed sealed container (P) can be set, and a means for twisting a cap skirt (P-22) part and/or a sealed container body (P-1) while a cap skirt (P-22) part is being drawn; and
the drawing means having a setting-in hole or a setting-in recess (F-148), in which a cap skirt (P-22) part of t h e placed sealed container (P) can be set has: a container table (F-131) for placing the sealed container thereon; a female forming member (F-14) having a setting-in hole or a setting-in recess(F-148), in which a cap skirt (p-22) part of the sealed container (P) placed on the container table (F-131) can be set; and an elevating mechanism for moving the container table (B-3) and/or the female forming member close to or away from each other such that the cap skirt (P-22) part of the sealed container (P) can be set in/withdrawn from the setting-in hole or the setting-in recess (F-148) of the female forming member (F-14).

2. The filling/packaging machine according to claim 1, wherein the female forming member (F-14) has: an extrusion piston (F-142) which is provided such that it can reciprocate in a cylindrical hollow part of the female forming member (F-14), and which has a setting-in hole or a setting-in recess (F-148), in which a cap skirt (P-22) part of a sealed container (P) can be set, at the lower end; and a means for urging the extrusion piston (F-142) toward an open end of a formed hole.

3. The filling/packaging machine according to claim 2, wherein the means for twisting a cap skirt (P-22) part and/or a sealed container body (P-1) while a cap skirt (P-22) part is being drawn is a means for rotating a gear fixed to a piston rod of an extrusion piston (F-142) with a synchronous belt (F-153) being wrapped around a plurality of pulleys (F-151, F-152).

4. The filling/packaging machine according to any one of claims 1 to 3, which has a heating means for heating a cap skirt (P-22) part of a sealed container (P) provided prior to a drawing step or a drawing/twisting step of a cap skirt (P-22) part of a sealed container (P) with the use of a drawing means or a drawing /twisting means.

5. The filling/packaging machine according to claim 4, wherein the heating means has a hot air nozzle (F-2) for injecting hot air to a cap skirt (P-22) part of a sealed container (P), and a rotating means for rotating and transferring a sealed container (P) with the use of a longitudinal axis of the sealed container as a rotary axis.

6. The filling/packaging machine according to any one of claims 1 to 5, wherein the grooves or projections provided on the inner circumferential surface of the forming die, and/or the grooves or projections provided on the outer circumferential surface of the former are provided parallel to the setting-in direction of the former in the cap punching-out and forming device.

7. The filling/packaging machine according to claim 6, wherein a plurality of grooves (C-441) is provided on the inner circumferential surface of the forming die (C-44) in the cap punching-out and forming device (C-4).

8. The filling/packaging machine according to claim 7, wherein a cross-sectional shape of the grooves (C-441) provided on the inner circumferential surface of the forming die (C-44) is a circular arc.

9. The filling/packaging machine according to any one of claims 1 to 8, wherein the inner circumferential surface of the forming die (C-44) is surface-treated in the cap punching-out and forming device (C-4).

10. The filling/packaging machine according to any one of claims 1 to 9, wherein the inner circumferential surface and a mouth of the forming die (C-44) are surface-treated in the cap punching-out and forming device (C-4).

11. The filling/packaging machine according to claim 9 or 10, wherein the surface treatment is a nickel-boron treatment.

12. The filling/packaging machine according to any one of claims 1 to 11, wherein a gap between the forming die (C-44) and the former (C-48) is adjusted not to exceed 4.0 times the thickness of the sheet-like cap material in the cap punching-out and forming device (C-4).

## Patentansprüche

1. Füll-/Verpackungsmaschine zum Füllen eines Inhalts in einen Behälterkörper (P-1), zum Anbringen einer Kappe (P-2) an dem mit dem Inhalt gefüllten Behälterkörper (P-1) und zum Verschließen des Behälterkörpers (P-1) mit der Kappe (P-2), um einen verschlossenen Behälter (P) herzustellen, die aufweist:
eine Behälterzuführungsvorrichtung (A) zum Zuführen eines rohrförmigen Behälterkörpers mit Kunstharzboden zu einer Füllvorrichtung;
eine Füllvorrichtung (B) zum Füllen eines Inhalts in einen zugeführten Behälterkörper;
eine primäre Kappenkaltformungsvorrichtung (C) zum Formen einer geformten Kunstharzkappe, die einen scheibenförmigen Kappenkörper (P-21) und einen derart bereitgestellten Randteil (P-22), dass er von einem peripheren Teil des Kappenkörpers hängt, aufweist, aus einer Harzplatte zum Kaltformen; eine
Kappenzuführungsvorrichtung (D) zum Zuführen einer geformten Kappe zu einer Öffnung an einem oberen Ende des mit einem Inhalt gefüllten Behälterkörpers (P-1);
eine Verschlussvorrichtung (E) zum Verschließen einer Öffnung an einem oberen Ende des Behälterkörpers mit einer geformten Kappe, um einen verschlossenen Behälter herzustellen; und eine sekundäre Kappenformungsvorrichtung (F) zum Formen einer durch die primäre Kappenkaltformungsvorrichtung (C) geformten Kappe (P-2) eines verschlossenen Behälters in eine endgültige Kappenform, wobei die primäre Kappenkaltformungsvorrichtung (C) eine Kappenmaterial-Ausstanzeinrichtung (C-1) zum Ausstanzen eines oder mehrerer Kappenmaterialien aus der Harzplatte zum Kaltformen und eine ein Formungswerkzeug (C-44) und einen Former zum Formen des durch die Kappenmaterial-Ausstanzeinrichtung (C-1) ausgestanzten Kappenmaterials aufweisende Kappenformungseinrichtung aufweist,
und eine Kappen-Ausstanz- und -Formungsvorrichtung (C-4) aufweist, wobei mehrere Nuten (C-441) oder Vorsprünge auf einer inneren Umfangsfläche des Formungswerkzeugs (C-44) bereitgestellt sind und/oder mehrere Nuten (C-441) oder
Vorsprünge auf einer äußeren Umfangsfläche des Formers (C-48) bereitgestellt sind,
und
die sekundäre Kappenformungsvorrichtung (F) eine Zieheinrichtung oder eine Zieh-/Verdrehungseinrichtung für einen Kappenrandteil (P-22) eines verschlossenen Behälters (P) aufweist,
wobei die Zieh-/Verdrehungseinrichtung für einen Kappenrandteil (P-22) des verschlossenen Behälters (P) eine ein Einsetzloch oder eine Einsetzaussparung (F-148), in das bzw. die ein Kappenrandteil (P-22) eines platzierten verschlossenen Behälters (P) gesetzt werden kann, aufweisende Zieheinrichtung und eine Einrichtung zum Verdrehen eines Kappenrandteils (P-22) und/oder eines verschlossenen Behälterkörpers (P-1) während eines Ziehens eines Kappenrandteils (P-22) aufweist,
und
die Zieheinrichtung ein Einsetzloch oder eine Einsetzaussparung (F-148), in das bzw.
die ein Kappenrandteil (P-22) des platzierten verschlossenen Behälters (P) gesetzt werden kann, aufweisende Zieheinrichtung aufweist: einen Behältertisch (F-131) zum darauf Platzieren des verschlossenen Behälters, ein aufnehmendes Formungselement (F-14), das ein Einsetzloch oder eine Einsetzaussparung (F-148), in das bzw. die ein Kappenrandteil (P-22) des auf dem Behältertisch (F-131) platzierten verschlossenen Behälters (P) gesetzt werden kann, aufweist, und einen Hebemechanismus (P-3) zum Bewegen des Behältertischs (B-3) und/oder des aufnehmenden Formungselements nahe zu oder fort von einander derart, dass der Kappenrandteil (P-22) des verschlossenen Behälters (P) in das Einsetzloch oder die Einsetzaussparung (F-148) des aufnehmenden Formungselements (F-14) eingesetzt oder davon entfernt werden kann.

2. Füll-/Verpackungsmaschine nach Anspruch 1, wobei das aufnehmende Formungselement (F-14) aufweist: einen Extrusionskolben (F-142), der derart bereitgestellt ist, dass er sich in einem zylindrischen hohlen Teil des aufnehmenden Formungselements (F-14) hin- und herbewegen kann, und der ein Einsetzloch oder eine Einsetzaussparung (F-148) aufweist, in das bzw. die ein Kappenrandteil (P-22) eines verschlossenen Behälters (P) am unteren Ende gesetzt werden kann, und eine Einrichtung zum Drücken des Extrusionskolbens (F-142) zu einem offenen Ende eines geformten Lochs.

3. Füll-/Verpackungsmaschine nach Anspruch 2, wobei die Einrichtung zum Verdrehen eines Kappenrandteils (P-22) und/oder eines verschlossenen Behälterkörpers (P-1) während eines Ziehens eines Kappenrandteils (P-22) eine Einrichtung zum Drehen eines an einer Kolbenstange eines Extrusionskolbens (F-142) mit einem taktsynchronband (F-153) befestigten Zahnrads mit einem um mehrere Rollen (F-151, F-152) gewickelten Synchronriemen ist.

4. Füll-/Verpackungsmaschine nach einem der Ansprüche 1 bis 3, die eine Erwärmungseinrichtung zum Erwärmen eines Kappenrandteils (P-22) eines verschlossenen Behälters (P) aufweist, die vor einem Ziehschritt oder einem Zieh-/Verdrehungsschritt eines Kappenrandteils (P-22) eines verschlossenen Behälters (P) bei Benutzung einer Zieheinrichtung oder einer Zieh-/Verdrehungseinrichtung bereitgestellt ist.

5. Füll-/Verpackungsmaschine nach Anspruch 4, wobei die Erwärmungseinrichtung eine Heißluftdüse (F-2) zum Einbringen von Heißluft zu einem Kappenrandteil (P-22) eines verschlossenen Behälters (P) und eine Dreheinrichtung zum Drehen und Übertragen eines verschlossenen Behälters (P) bei Verwendung einer Längsachse des verschlossenen Behälters als eine Drehachse aufweist.

6. Füll-/Verpackungsmaschine nach einem der Ansprüche 1 bis 5, wobei die auf der inneren Umfangsfläche des Formungswerkzeugs bereitgestellten Nuten oder Vorsprünge und/oder die auf der äußeren Umfangsfläche des Formers bereitgestellten Nuten oder Vorsprünge parallel zur Einsetzrichtung des Formers in die Kappen-Ausstanz- und -Formungsvorrichtung bereitgestellt sind.

7. Füll-/Verpackungsmaschine nach Anspruch 6, wobei mehrere Nuten (C-441) auf der inneren Umfangsfläche des Formungswerkzeugs (C-44) in der Kappen-Ausstanz- und -Formungsvorrichtung (C-4) bereitgestellt sind.

8. Füll-/Verpackungsmaschine nach Anspruch 7, wobei eine Querschnittsform der auf der inneren Umfangsfläche des Formungswerkzeugs (C-44) bereitgestellten Nuten (C-441) ein Kreisbogen ist.

9. Füll-/Verpackungsmaschine nach einem der Ansprüche 1 bis 8, wobei die innere Umfangsfläche des Formungswerkzeugs (C-44) in der Kappen-Ausstanz- und - Formungsvorrichtung (C-4) oberflächenbehandelt ist.

10. Füll-/Verpackungsmaschine nach einem der Ansprüche 1 bis 9, wobei die innere Umfangsfläche und eine Mundöffnung des Formungswerkzeugs (C-44) in der Kappen-Ausstanz- und -Formungsvorrichtung (C-4) oberflächenbehandelt sind.

11. Füll-/Verpackungsmaschine nach Anspruch 9 oder 10, wobei die Oberflächenbehandlung eine Nickel-Bohr-Behandlung ist.

12. Füll-/Verpackungsmaschine nach einem der Ansprüche 1 bis 11, wobei ein Zwischenraum zwischen dem Formungswerkzeug (C-44) und dem Former (C-48) so eingestellt ist, dass er das 4,0fache der Dicke des plattenförmigen Kappenmaterials in der Kappen-Ausstanz- und -Formungsvorrichtung (C-4) nicht überschreitet.

## Revendications

1. Machine de remplissage/emballage pour remplir un contenu dans un corps de récipient (P-1), pour placer un capuchon (P-2) sur le corps de récipient (P-1) rempli du contenu, et pour assurer l'étanchéité du corps de récipient (P-1) avec le capuchon (P-2) pour rendre étanche un récipient (P), qui comprend : un dispositif d'alimentation de récipient (A) pour alimenter un corps de récipient tubulaire muni d'un fond de résine synthétique vers un dispositif de remplissage ; un dispositif de remplissage (B) pour le remplissage d'un contenu dans un corps de récipient alimenté ; un dispositif de formation à froid de capuchon principal (C) pour former un capuchon formé de résine synthétique, qui a un corps en forme de disque (P-21) et une partie de jupe (P-22) agencée de telle sorte qu'elle est suspendue à partir d'une partie périphérique du corps de capuchon, à partir d'une feuille de résine pour formage à froid ; un dispositif d'alimentation de capuchon (D) pour alimenter un capuchon formé vers une ouverture située à une extrémité supérieure d'un corps de récipient (P-1) rempli d'un contenu ; un dispositif d'étanchéité (E) pour rendre étanche une ouverture située à une extrémité supérieure d'un corps de récipient à l'aide d'un capuchon mis en forme pour faire un récipient fermé hermétiquement ; et un dispositif de formage de capuchon secondaire (F) pour former un capuchon (P-2) d'un récipient fermé hermétiquement formé par le dispositif de formage à froid de capuchon principal (C) dans la forme d'un capuchon final, dans lequel le dispositif de formage à froid de capuchon principal (C) comprend des moyens de découpage d'un matériau de capuchon (C-1) pour découper un ou plusieurs matériaux de capuchon à partir de la feuille de résine de formage à froid, et des moyens de formage de capuchon comportant une matrice de formage (C-44) et un dispositif de formage pour former le matériau de capuchon (C-1) découpé par les moyens de découpage de matériau de capuchon, et comprend un dispositif de découpage et formage (C-4) dans lequel une pluralité de rainures (C-441) ou de saillies sont agencées sur une surface circonférentielle intérieure de la matrice de formage (C-44), et/ou une pluralité de rainures (C-441) ou de saillies sont agencées sur une surface circonférentielle extérieure du dispositif de formage (C-48), et
le dispositif de formage de capuchon secondaire (F) a des moyens d'étirage ou des moyens d'étirage/torsion d'une partie de jupe de capuchon (P-22) d'un récipient étanche (P),
dans lequel les moyens d'étirage/torsion d'une partie de jupe de capuchon (P-22), du récipient étanche (P) comportent des moyens d'étirage ayant un trou d'introduction ou un évidement d'introduction (F-148), dans lequel peut être mise une partie de jupe de capuchon (P-22) d'un récipient étanche positionné (P), et des moyens de torsion d'une partie de jupe de capuchon (P-22) et/ou d'un corps de récipient étanche (P-1) tandis qu'une partie de jupe de capuchon (P¬22) est en cours d'étirage; et
les moyens d'étirage ayant un trou d'introduction ou un évidement d'introduction (F-148) dans lequel peut être mise une partie de jupe de capuchon (P-22), du récipient étanche positionné (P) ont : une table pour récipient (F-131) pour placer le récipient étanche sur celle-ci ; un élément de formage femelle (F-14) ayant un trou d'introduction ou un évidement d'introduction (F-148), dans lequel peut être mise une partie de jupe de capuchon (p-22) du récipient étanche (P) placé sur la table de récipient (F-131) ; et un mécanisme de levage pour déplacer la table de conteneur (B-3) et/ou l'élément de formage femelle à proximité ou à l'écart l'un de l'autre de telle sorte que la partie de jupe de capuchon (P-22), du récipient étanche (P) peut être mise/retirée du trou d'introduction ou évidement d'introduction (F-148) de l'élément de formage femelle (F-14).

2. Machine de remplissage/emballage selon la revendication 1, dans laquelle l'élément de formage femelle (F-14) a : un piston d'extrusion (F-142) qui est agencé de manière à pouvoir aller et venir dans une partie cylindrique creuse de l'élément de formage femelle (F-14), et qui a un trou d'introduction ou un évidement d'introduction (F-148), dans lequel une partie de jupe de bouchon (P-22), d'un récipient étanche (P) peut être mise, à l'extrémité inférieure ; et des moyens pour repousser le piston d'extrusion (F-142) en direction d'une extrémité ouverte d'un trou formé.

3. Machine de remplissage/emballage selon la revendication 2, dans laquelle les moyens de torsion d'une partie de jupe de capuchon (P-22) et/ou d'un corps de récipient étanche (P-1) alors qu'une partie de jupe de capuchon (P-22) est étirée sont des moyens pour faire tourner un engrenage fixé sur une tige de piston d'un piston d'extrusion (F-142) ayant une courroie de synchronisation (153-F) enroulée autour d'une pluralité de poulies (F-151, F-152).

4. Machine de remplissage/emballage selon l'une quelconque des revendications 1 à 3, qui a des moyens de chauffage pour chauffer une partie de jupe de capuchon (P-22), une partie d'un récipient étanche (P) agencés avant une étape d'étirage ou une étape d'étirage/torsion d'une partie de jupe de capuchon (P-22) d'un récipient étanche (P) avec l'utilisation de moyens d'étirage ou de moyens d'étirage/torsion.

5. Machine de remplissage/emballage selon la revendication 4, dans laquelle les moyens de chauffage ont une buse d'air chaud (F-2) pour injecter de l'air chaud sur une partie de jupe de capuchon (P-22) d'un récipient étanche (P), et des moyens pour faire tourner et transférer un récipient étanche (P) avec l'utilisation d'un axe longitudinal du récipient étanche comme axe de rotation.

6. Machine de remplissage/emballage selon l'une quelconque des revendications 1 à 5, dans laquelle les rainures ou saillies agencées sur la surface circonférentielle intérieure de la matrice de formage, et/ou les rainures ou saillies agencées sur la surface circonférentielle extérieure du dispositif de formage sont agencées parallèles à la direction d'introduction du dispositif de formage dans le dispositif de découpage et formage de capuchon.

7. Machine de remplissage/emballage selon la revendication 6, dans laquelle une pluralité de rainures (C-441) est agencée sur la surface circonférentielle intérieure de la matrice de formage (C-44) dans le dispositif de découpage et formage de capuchon (C-4).

8. Machine de remplissage/emballage selon la revendication 7, dans laquelle une forme en coupe transversale des rainures (C-441) agencées sur la surface circonférentielle intérieure de la matrice de formage (C-44) est un arc de cercle.

9. Machine de remplissage/emballage selon l'une quelconque des revendications 1 à 8, dans laquelle la surface circonférentielle intérieure de la matrice de formage (C-44) est traitée en surface dans le dispositif de découpage et formage (C-4).

10. Machine de remplissage/emballage selon l'une quelconque des revendications 1 à 9, dans laquelle la surface circonférentielle intérieure et une bouche de la matrice de formage (C-44) sont traitées en surface dans le dispositif de découpage et formage (C-4).

11. Machine de remplissage/emballage selon les revendications 9 ou 10, dans laquelle le traitement de surface est un traitement au nickel-bore.

12. Machine de remplissage/emballage selon l'une quelconque des revendications 1 à 11, dans laquelle un espace entre la matrice de formage (C-44) et le dispositif de formage (C-48) est ajusté pour ne pas dépasser 4,0 fois l'épaisseur du matériau de capuchon en feuille dans le dispositif de découpage et formage (C-4).
